(19) Europäisches Patentamt
European Patent Office
Office européen des brevets

(11) **EP 2 655 924 B1**

(12) **EUROPÄISCHE PATENTSCHRIFT**

(45) Veröffentlichungstag und Bekanntmachung des Hinweises auf die Patenterteilung:
**09.09.2015 Patentblatt 2015/37**

(21) Anmeldenummer: **11808595.0**

(22) Anmeldetag: **22.12.2011**

(51) Int Cl.:
*F16H 3/00* *(2006.01)*   *F16H 3/093* *(2006.01)*

(86) Internationale Anmeldenummer:
**PCT/EP2011/006524**

(87) Internationale Veröffentlichungsnummer:
**WO 2012/084250 (28.06.2012 Gazette 2012/26)**

(54) **DOPPELKUPPLUNGSWINDUNGSGETRIEBE**

DOUBLE CLUTCH WINDING TRANSMISSION

TRANSMISSION À CONTOURNEMENT À DOUBLE EMBRAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2010 DE 102010055644**

(43) Veröffentlichungstag der Anmeldung:
**30.10.2013 Patentblatt 2013/44**

(73) Patentinhaber: **Volkswagen Aktiengesellschaft 38440 Wolfsburg (DE)**

(72) Erfinder:
• **VÖGE, Wolfgang 38110 Braunschweig (DE)**
• **VOIGT, Arne 38440 Wolfsburg (DE)**

(56) Entgegenhaltungen:
**DE-A1-102007 049 266    DE-A1-102007 051 806 DE-C1- 19 860 251**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Doppelkupplungswindungsgetriebe für ein Kraftfahrzeug mit einer ersten Getriebeeingangswelle, mit einer zweiten Getriebeeingangswelle, mit mindestens einer Triebwelle, mit mehreren Zahnrädern und mit mehreren Synchronisiervorrichtungen, wobei die erste Getriebeeingangswelle über eine erste Reibkupplung und die zweite Getriebeeingangswelle über eine zweite Reibkupplung mit einem Antriebsmotor verbindbar oder verbunden ist, wobei die Zahnräder derart kämmend angeordnet sind, dass diese kämmend angeordneten Zahnräder mehrere Zahnradstufen bilden, wobei mit den Synchronisiervorrichtungen die Zahnradstufen derart schaltbar sind, dass mehrere Vorwärtsgänge schaltbar sind, wobei mindestens ein Vorwärtsgang als Windungsgang ausgebildet ist und sich dadurch der Leistungsfluss des Windungsganges über mindestens zwei Zahnradstufen windet, wobei die den Vorwärtsgängen zugeordneten Zahnradstufen jeweils ein der Triebwelle zugeordnetes und ein der Getriebeeingangswelle zugeordnetes Zahnrad aufweisen.

Aus der DE 10 2006 054 281 ist ein gattungsbildendes Doppelkupplungswindungsgetriebe bekannt. Das Doppelkupplungswindungsgetriebe weist eine Doppelkupplung mit zwei Reibkupplungen auf. Die beiden Reibkupplungen sind mit einem Antriebsmotor gekoppelt beziehungsweise koppelbar. Das Doppelkupplungswindungsgetriebe weist zwei koaxial zueinander angeordnete Getriebeeingangswellen auf. Jeder Getriebeeingangswelle ist ein Teilgetriebe zugeordnet. Die Getriebeeingangswellen sind jeweils mit einer Reibkupplung der Doppelkupplung verbunden. Koaxial zu den Getriebeeingangswellen ist eine Getriebeausgangswelle angeordnet. Das Doppelkupplungswindungsgetriebe weist eine Vorgelegewelle auf, wobei die Vorgelegewelle über eine drehfest verbundene Zahnradstufe mit der Getriebeausgangswelle gekoppelt ist. Die Vorgelegewelle dient als Triebwelle. Diese Triebwelle beziehungsweise Vorgelegewelle erstreckt sich parallel zu den Getriebeeingangswellen. Auf der Triebwelle ist eine mehrteilige Hohlwelle angeordnet. Über mehrere Zahnradstufen stehen die Hohlwellenteile mit der ersten und/oder der zweiten Getriebeeingangswelle in Verbindung. Die Zahnradstufen und die Hohlwellenteile sind teilweise dem ersten Teilgetriebe und teilweise dem zweiten Teilgetriebe zugeordnet. Dem ersten Windungsteilgetriebe sind drei Zahnradstufen zugeordnet, und dem zweiten Windungsteilgetriebe sind zwei Zahnradstufen zugeordnet. Es sind daher insgesamt fünf Zahnradstufen vorgesehen, wobei die fünf Zahnradstufen auf insgesamt fünf Zahnradebenen angeordnet sind. Das doppelkupplungsnahe Windungsteilgetriebe weist die drei Zahnradstufen auf. Der Leistungsfluss wenigstens eines Ganges windet sich über mehrere Zahnradstufen. Die Zahnradstufen sind durch miteinander kämmend angeordnete Zahnräder gebildet. Die Windungsteilgetriebe sind derart unabhängig voneinander, dass der Leistungsfluss eines Windungsganges sich nur über die zugeordnete Getriebeeingangswelle und die dem entsprechenden Windungsteilgetriebe zugeordnete Zahnradstufen windet. Gangwechsel erfolgen durch überschneidendes Öffnen und Schließen der beiden Reibkupplungen, wobei in dem jeweils nicht aktiven Windungsteilgetriebe der nächstfolgende Gang vorgewählt ist. Es sind dabei zwei Ganggruppen gebildet, nämlich eine Ganggruppe mit den geraden Gängen zwei, vier, sechs und acht und eine Ganggruppe mit den ungeraden Gängen eins, drei, fünf und sieben. Die Ganggruppen mit den geraden Gängen werden durch das eine Windungsteilgetriebe und die Ganggruppen mit den ungeraden Gängen werden durch das andere Windungsteilgetriebe realisiert. Dadurch windet sich der Leistungsfluss nur unter Beteiligung einer der Getriebeeingangswellen, wobei die Windungsteilgetriebe unabhängig voneinander schaltbar sind.

Aus der DE 10 2007 051 806 A1 und DE 10 2007 049 266 A1 sind auch Doppelkupplungswindungsgetriebe mit zwei parallelen Triebwellen bekannt, deren Ritzeln mit einer Abtriebswelle kämmen. Auch in diesen Getrieben windet sich der Leistungsfluss des Windungsganges immer nur über die der freien Getriebeeingangswelle zugeordnete Zahnradstufen. Über eine der anderen, nicht freien, Getriebeeingangswelle zugeordnete Zahnradstufe wird das Motordrehmoment in dessen Teilgetriebe eingeleitet und dann über zwei Zahnradstufen der freien Getriebeeingangswelle von einer Triebwelle auf die andere übertragen.

Weiterhin ist aus der DE 198 60 251 C1 ein Doppelkupplungsgetriebe bekannt, mit der Triebwellen zugeordneten Losrädern und der Getriebeeingangswellen zugeordneten Fasträdern, wobei ein dieser Festräder als Losrad ausgeführt ist und kann entweder mit einer oder mit der anderen Getriebeeingangswelle drehfest verbunden werden. Bei diesem Getriebe ist kein Windungsgang möglich, weil alle der den Triebwellen zugeordneten Losräder ausschließlich mit der zugehörigen Triebwelle drehfest verbunden werden können

Das eingangs genannte Doppelkupplungswindungsgetriebe ist noch nicht optimal ausgebildet. Zur Reduzierung von Emissionen während der Fahrt sollte der Betriebszustand des Antriebsmotors möglichst gut an den aktuellen Fahrzustand des Kraftfahrzeuges angepasst werden können. Dies kann unter anderem dadurch erreicht werden, dass das Doppelkupplungswindungsgetriebe eine hohe Gangzahl aufweist. Zur Reduzierung von Emissionen ist es wünschenswert, auch bei hohen Fahrgeschwindigkeiten, beispielsweise bei Autobahnfahrten die Motordrehzahl möglichst gering zu halten. Ziel ist es daher, eine hohe Gangzahl bereitzustellen, ohne die engen Bauraumsrestriktionen zu verletzen, welche von Seiten der Fahrzeughersteller vorgegeben werden. Das gattungsbildende Doppelkupplungswindungsgetriebe ist für einen Front-/Quereinbau zu lang bauend und daher noch nicht optimal ausgebildet.

Der Erfindung liegt daher die Aufgabe zu Grunde, ein Doppelkupplungswindungsgetriebe derart auszugestalten und weiterzubilden, so dass das Doppelkupplungswindungsgetriebe zum einen eine hohe Anzahl von Gängen bereitstellt und zum anderen für einen Front-/Quereinbau geeignet ist.

Die eingangs genannten Nachteile sind nun dadurch vermieden, dass der Leistungsfluss des Windungsganges sich sowohl über eine der ersten Getriebeeingangswelle zugeordnete Zahnradstufe als auch über eine der zweiten Getriebeeingangswelle zugeordnete Zahnradstufe windet. Wenigstens eines der Getriebeeingangswellen zugeordneten Zahnräder zwei Zahnradstufen gleichzeitg zugeordnet sind. Dieses (erste) Zahnrad ist als Losrad ausgeführt und der Leistungsfluss des Windungsganges beide diesem ersten Zahnrad zugeordnete Zahnradstufen durchläuft. Einer der Triebwellen sind zwei Losräder zugeordnet (ein zweites Zahnrad und ein drittes Zahnrad), die drehfest miteinander verbindbar sind, wobei eines dieser Losräder (das zweite Zahnrad) einer der beiden dem (erstem) Zahnrad zugeordneten Zahnradstufen zugeordnet ist und das andere (das dritte Zahnrad) einer anderen Zahnradstufe zugeordnet ist. Diese andere Zahnradstufe ist der anderen Getriebeeingangswelle als das erste Zahnrad zugeordnet. Dies hat den Vorteil, dass bauraumsparend mehrere Zahnradstufen und Synchronisiervorrichtungen mehrfach genutzt werden und dennoch vorzugsweise eine progressive Gangabstufung genähert realisierbar ist. Das Doppelkupplungswindungsgetriebe ist insbesondere derart axial kurz bauend, so dass es für einen Front-/Quereinbau in ein Kraftfahrzeug, insbesondere in einen PKW geeignet ist. Die Zahnradstufen sind insbesondere bestimmten Vorwärtsgängen zugeordnet. Beispielsweise kann ein Teil der Zahnradstufen geraden Vorwärtsgängen, beispielsweise den Vorwärtsgängen zwei, vier und sechs zugeordnet sein und andere Zahnradstufen können den ungeraden Vorwärtsgängen, beispielsweise den Vorwärtsgängen drei, fünf und sieben zugeordnet sein. Die geraden Zahnradstufen sind der einen Getriebeeingangswelle und die ungeraden Zahnradstufen sind der anderen Getriebeeingangswelle zugeordnet. Der Leistungsfluss (auch als "Kraftfluss" bezeichenbar) des Windungsganges nutzt sowohl eine gerade Zahnradstufe als auch eine ungerade Zahnradstufe. Wenn der Leistungsfluss von einem auf der Getriebeeingangswelle angeordneten Zahnrad auf ein der Triebwelle zugeordnetes Zahnrad übertragen wird, wird diese Zahnradstufe "vorwärts" genutzt. Wenn der Leistungsfluss von einem auf der Triebwelle angeordneten Zahnrad auf ein der Getriebeeingangswelle zugeordnetes Zahnrad übertragen wird, wird diese Zahnradstufe "rückwärts" genutzt. Zur Berechnung der Gesamtübersetzung des Windungsganges wird ein Bruch gebildet, wobei die Einzelübersetzung der vorwärts genutzten Zahnradstufe in den Zähler des entsprechenden Bruches aufgenommen werden. Im Nenner dieses Bruches, beziehungsweise im Nenner der Gesamtübersetzung erscheinen diejenigen Einzelübersetzungen der Zahnradstufen, die im Leistungsfluss "rückwärts" genutzt werden. Vorzugsweise erscheint höchstens eine Übersetzung der jeweiligen Zahnradstufe eines zum Windungsgang benachbarten Ganges im Zähler. Im Nenner erscheinen vorzugsweise nur Übersetzungsverhältnisse von Zahnradstufen, die nicht direkt zum Windungsgang benachbarten Vorwärtsgängen zugeordnet sind. Insbesondere sind zwei Triebwellen vorgesehen. Die beiden Triebwellen erstrecken sich insbesondere radial beabstandet neben den koaxial angeordneten Getriebeeingangswellen. Das Doppelkupplungswindungsgetriebe weist vorzugsweise sieben Vorwärtsgänge auf. Das Doppelkupplungswindungsgetriebe weist vorzugsweise einen mechanischen Rückwärtsgang auf. Das Doppelkupplungswindungsgetriebe stellt vorzugsweise doppelt-geometrische Gangabstufungen zur Verfügung, die eine progressive Gangabstufung sehr gut nähert, d.h. den höheren Vorwärtsgängen sind im Mittel kleinere Stufensprünge als den niedrigeren Vorwärtsgängen zugeordnet. Die Stufensprünge (auch als "Gangsprünge" bezeichenbar) ergeben sich aus dem Verhältnis der Übersetzung des zugeordneten Vorwärtsganges zu der Übersetzung des nachfolgenden, höheren Vorwärtsganges. Bei einer geometrischen Gangabstufung sind die Stufensprünge im wesentlichen gleich groß. Bein einer "doppelt-geometrischen" Gangabstufung ist der erste Stufensprung der benachbarten Gänge im Bereich des ersten bis vierten Ganges gleich und der zweite Stufensprung im Bereich des vierten bis siebten Ganges auch gleich, wobei der erste und zweite Stufensprung zueinander aber unterschiedlich sind, insbesondere der zweite Stufensprung kleiner ist als der erste Stufensprung. Die eingangs genannten Nachteile sind daher vermieden und entsprechende Vorteile erzielt.

Es gibt nun eine Vielzahl von Möglichkeiten, das erfindungsgemäße Doppelkupplungswindungsgetriebe in vorteilhafter Art und Weise auszugestalten und weiterzubilden. Hierfür darf zunächst auf die dem Patentanspruch 1 nachgeordneten Patentansprüche verwiesen werden. Es werden nun sechs Ausgestaltungen anhand der Zeichnung und der dazugehörenden Beschreibung näher erläutert. In der Zeichnung zeigt:

Fig. 1 in einer stark schematischen Schnittansicht eine Ausgestaltung eines nicht erfindungsgemäßen Doppelkupplungsgetriebes,

Fig. 2 in einer stark schematischen Schnittansicht die erste Ausgestaltung eines nicht erfindungsgemäßen Doppelkupplungswindungsgetriebes mit einem Leistungsfluss eines ersten Windungsganges,

Fig. 3 in einer stark schematischen Schnittansicht eine weitere Ausgestaltung des nicht erfindungsgemäßen Doppelkupplungswindungsgetriebes mit einem Leistungsfluss eines weiteren Windungsganges,

Fig. 4 in einer schematischen Schnittansicht eine zweite Ausgestaltung eines Doppelkupplungswindungsgetriebes,

Fig. 5 in einer schematischen Schnittansicht eine dritte Ausgestaltung eines Doppelkupplungswindungsgetriebes,

Fig. 6    in einer schematischen Schnittansicht eine vierte Ausgestaltung eines Doppelkupplungswindungsgetriebes,

Fig. 7    in einer schematischen Schnittansicht eine fünfte Ausgestaltung eines Doppelkupplungswindungsgetriebes, und

Fig. 8    in einer schematischen Schnittansicht eine sechste nicht erfindungsgemäße Ausgestaltung eines Doppelkupplungswindungsgetriebes.

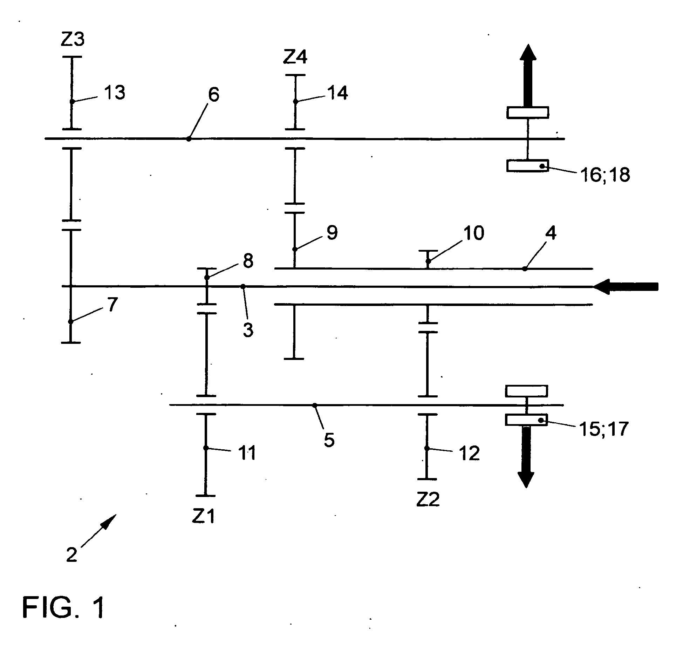

Es darf zunächst auf ein erstes Doppelkupplungswindungsgetriebe 1 anhand der Fig. 1 bis 3 näher eingegangen werden:

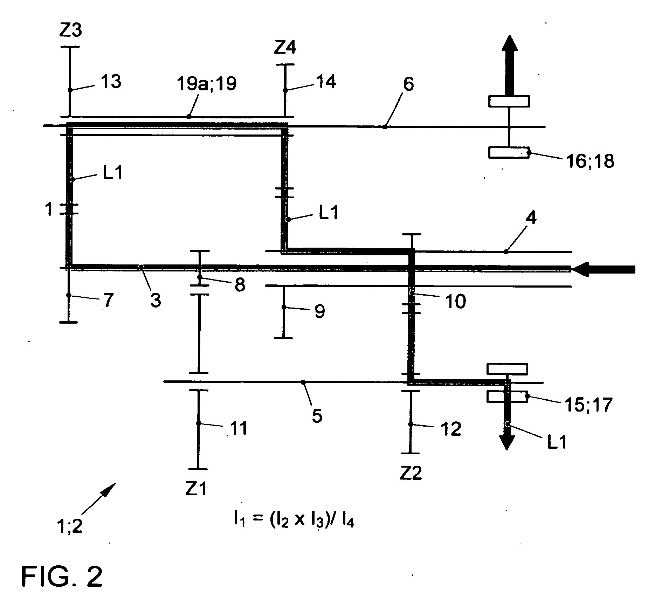

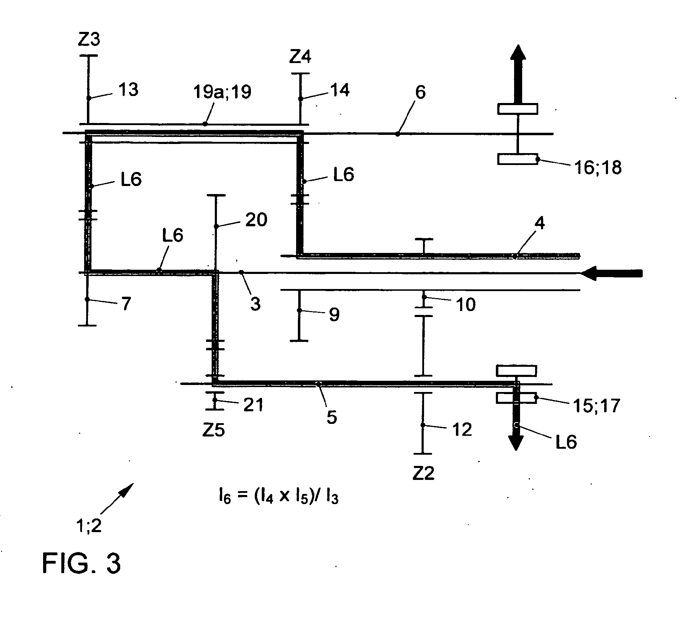

In den Fig. 2 und 3 ist dabei ein Doppelkupplungswindungsgetriebe 1 dargestellt und in Fig. 1 ist ein Doppelkupplungsgetriebe 2 dargestellt. An dem Beispiel des hier dargestellten Doppelkupplungsgetriebes 2 bzw. des hier dargestellten Doppelkupplungswindungsgetriebes 1 wird erläutert, wie in einem vorgegebenen Bauraum zusätzliche Windungsgänge untergebracht werden können.

Fig. 1 zeigt das Doppelkupplungsgetriebe 2. Das Doppelkupplungsgetriebe 2 ist für ein Kraftfahrzeug geeignet. Das Doppelkupplungsgetriebe 2 weist eine erste Getriebeeingangswelle 3 und eine zweite Getriebeeingangswelle 4 auf. Der ersten Getriebeeingangswelle 3 ist eine erste Reibkupplung (nicht dargestellt) zugeordnet. Der zweiten Getriebeeingangswelle 4 ist eine zweite Reibkupplung zugeordnet. Die Reibkupplungen sind insbesondere als nasslaufende Reibkupplungen ausgebildet. Die beiden Reibkupplungen sind Teil einer Doppelkupplung (nicht dargestellt). Die Doppelkupplung ist mit einer Antriebswelle verbunden. Die Antriebswelle ist von einem Antriebsmotor (nicht dargestellt) antreibbar. Die Doppelkupplung teilt das an der Antriebswelle anliegende Drehmoment mittels der beiden Reibkupplungen auf die beiden Getriebeeingangswellen 3, 4 auf. Die beiden Getriebeeingangswellen 3, 4 sind koaxial zueinander angeordnet. Die Getriebeeingangswelle 3 ist innerhalb der hohl ausgebildeten Getriebeeingangswelle 4 angeordnet. Die Getriebeeingangswelle 3 ragt doppelkupplungsfern aus der Getriebeeingangswelle 4 heraus. Die Getriebeeingangswelle 3 erstreckt sich zumindest teilweise innerhalb der äußeren Getriebeeingangswelle 4.

Das Doppelkupplungsgetriebe 2 weist ferner mindestens eine, insbesondere zwei Triebwellen 5, 6 auf. Die beiden Triebwellen 5, 6 sind parallel und beabstandet zu den koaxial angeordneten Getriebeeingangswellen 3, 4 angeordnet.

Ferner weist das Doppelkupplungsgetriebe 2 mehrere Zahnräder 7 bis 14 auf. Die Zahnräder 7 bis 14 sind derart kämmend angeordnet, dass diese kämmend angeordneten Zahnräder 7 bis 14 mehrere Zahnradstufen Z1, Z2, Z3, Z4 bilden. Die Zahnradstufe Z1 ist durch die Zahnräder 8 und 11 gebildet. Die Zahnradstufe Z2 ist durch die Zahnräder 10 und 12 gebildet. Die Zahnradstufe Z3 ist durch die Zahnräder 7 und 13 gebildet. Die Zahnradstufe Z4 ist durch die Zahnräder 9 und 14 gebildet. Die Zahnräder 7 und 8 sind der ersten Getriebeeingangswelle 3 zugeordnet. Die Zahnräder 9, 10 sind der zweiten Getriebeeingangswelle 4 zugeordnet. Die Zahnräder 11, 12 sind der Triebwelle 5 zugeordnet. Die Zahnräder 13, 14 sind der Triebwelle 6 zugeordnet.

Die Zahnradstufen Z1 und Z3 sind der ersten Getriebeeingangswelle 3 zugeordnet und die Zahnradstufen Z2 und Z4 sind der zweiten Getriebeeingangswelle 4 zugeordnet. Die der ersten Getriebeeingangswelle 3 zugeordnete Zahnradstufen Z1, Z3 bilden ein erstes Teilgetriebe. Die der zweiten Getriebeeingangswelle 4 zugeordneten Zahnradstufen Z2, Z4 bilden ein zweites Teilgetriebe. Die ungeraden Zahnradstufen Z1, Z3 und die geraden Zahnradstufen Z2, Z4 sind wechselweise lastschaltbar. Die erste Zahnradstufe Z1 ist dabei einem ersten Vorwärtsgang, die zweite Zahnradstufe Z2 ist einem zweiten Vorwärtsgang, die Zahnradstufe Z3 ist einem dritten Vorwärtsgang und die Zahnradstufe Z4 ist einem vierten Vorwärtsgang zugeordnet. Der Leistungsfluss wird dabei für den ersten und zweiten Vorwärtsgang über ein Abtriebszahnrad 15 und für die dritte und vierte Zahnradstufe beziehungsweise den dritten und den vierten Vorwärtsgang über das Abtriebszahnrad 16 geleitet. Die Abtriebszahnräder 15, 16 bilden Triebköpfe 17, 18. Die Abtriebszahnräder 15, 16 sind dabei am doppelkupplungsnahen Ende der Triebwellen 5, 6 angeordnet. Die Abtriebszahnräder 15, 16 sind drehfest mit den Triebwellen 5, 6 verbunden und stehen vzw. mit einem Differential in Eingriff.

In den Fig. 2 und Fig. 3 ist nun jeweils der Leistungsfluss L1, L6 eines Windungsganges bei einem Doppelkupplungswindungsgetriebe 1 dargestellt, wobei der Leistungsfluss sich über mehrere Zahnradstufen Z3, Z4, Z2 bzw. Z4,Z3, Z5 windet. Das in den Fig. 2 und 3 dargestellte Doppelkupplungswindungsgetriebe 1 weist mit geringfügigen Ausnahmen, die im Folgenden noch erläutert werden, im Wesentlichen zunächst die gleichen Komponenten wie auch das in der Fig. 1 dargestellte Doppelkupplungsgetriebe 2 auf. Die entsprechenden Komponenten sind daher auch mit den gleichen Bezugzeichen bezeichnet worden, wobei auf die vorhergehenden Ausführungen verwiesen werden darf.

Der Leistungsfluss L1 bzw. L6 des jeweiligen Windungsganges windet sich sowohl über eine der ersten Getriebeeingangswelle 3 zugeordnete Zahnradstufe Z3 bzw. Z3 und Z5 als auch über eine der zweiten Getriebeeingangswelle 4 zugeordnete Zahnradstufe Z2, Z4 bzw. Z4, so wie aus den Fig. 2 und 3 ersichtlich.

Das in Fig. 2 dargestellte Doppelkupplungsgetriebe 2 beziehungsweise Doppelkupplungswindungsgetriebe 1 unterscheidet sich von dem in Fig. 1 dargestellten Doppelkupplungsgetriebe 2 dadurch, dass zusätzlich eine Koppelvorrichtung 19 vorgesehen ist. Mit der Koppelvorrichtung 19 sind die Zahnräder 13 und 14 auf der Triebwelle 6 verbunden bzw. verbindbar. Die Koppelvorrichtung 19 ist dabei derart ausgestaltet, dass die Zahnradstufen Z3, Z4 drehfest miteinander verbunden werden können. Die Koppelvorrichtung 19 stellt vorzugsweise eine lösbare Verbindung zwischen den Zahnradstufen Z3 und Z4 her.

Die Koppelvorrichtung 19 weist vorzugsweise eine Hohlwelle 19a auf. Die Hohlwelle 19a verbindet die benachbarten Zahnradstufen Z3 und Z4. Dadurch ist eine Verbindung zwischen dem ersten und dem zweiten Teilgetriebe herstellbar. Das Zahnrad 14 und/oder das Zahnrad 13 sind vorzugsweise mit der Hohlwelle 19a über eine entsprechende Synchronisiervorrichtung (nicht dargestellt) drehfest und lösbar verbindbar. In den Fig. 1 bis 3 sind entsprechende Synchronisiervorrichtungen zur Schaltung der Zahnradstufen Z1 bis Z4 nicht dargestellt.

Die Übersetzung des ersten Vorwärtsganges kann nun dadurch erzeugt werden, dass die Zahnradstufen Z2 und Z3 vorwärts, das heißt in ursprünglicher Richtung vom Antrieb zum Abtrieb und die vierte Zahnradstufe Z4 rückwärts durchlaufen, das heißt vom Abtrieb zum Antrieb durchlaufen wird. Die erste Reibkupplung ist geschlossen und die zweite Reibkupplung ist geöffnet. Dadurch wird die Getriebeeingangswelle 3 mit dem Zahnrad 7 angetrieben. Dadurch, dass die Zahnradstufe Z3 vorwärts angetrieben wird, kann über die Koppelvorrichtung 19 auch die Zahnradstufe Z4 auf der Triebwelle 6 angetrieben werden, ohne dabei einen drehfesten Eingriff mit der Triebwelle 6 zu realisieren. Die angetriebene Zahnradstufe Z4 treibt nun rückwärts die Getriebeeingangswelle 4 an. Hierdurch wird die Zahnradstufe Z2 ebenfalls angetrieben. Wenn das Zahnrad 12 mit einer entsprechenden Synchronisiervorrichtung drehfest mit der Triebwelle 5 verbunden wird, kann der Leistungsfluss L1 dem Abtriebszahnrad 15 beziehungsweise dem Triebkopf 17 zugeleitet werden. Der Leistungsfluss L1 windet sich von der inneren Getriebeeingangswelle 3 über die Zahnradstufe Z3, die Koppelvorrichtung 19, die Zahnradstufe Z4, die äußere Getriebeeingangswelle 4 und somit die Zahnradstufe Z2 sowie schließlich über die Triebwelle 5 auf das Abtriebszahnrad 15.

Die in Fig. 1 und 2 dargestellte Zahnradstufe Z1 mit den Zahnrädern 8 und 11 wird nicht zur Realisierung des ersten Vorwärtsganges genutzt. Das Doppelkupplungsgetriebe 2 bzw. das Doppelkupplungswindungsgetriebe 1 ist dadurch zunächst um einen Windungsgang erweitert, der einen ersten Vorwärtsgang bildet. Die Zahnräder 8 und 11 können daher ersetzt werden durch zwei Zahnräder 20 und 21, wobei diese beiden Zahnräder 20 und 21 nun eine Zahnradstufe Z5 für einen fünften Vorwärtsgang bilden (vgl. Fig. 3).

Das in Fig. 3 dargestellte Doppelkupplungswindungsgetriebe 1 beziehungsweise Doppelkupplungsgetriebe 2 entspricht vom Aufbau her dem Doppelkupplungsgetriebe 2 beziehungsweise dem Doppelkupplungswindungsgetriebe 1 aus Fig. 2, wobei die Zahnradstufe Z1 durch die Zahnradstufe Z5 ersetzt worden ist. Durch drehfestes Verbinden des Zahnrads 21 mit der Triebwelle 5 kann der fünfte Vorwärtsgang eingelegt werden, wobei der Leistungsfluss dann direkt von der Getriebeeingangswelle 3 über die Zahnradstufe Z5 auf die Triebwelle 5 übertragen wird.

In Fig. 3 ist ferner ein Leistungsfluss L6 eines sechsten Vorwärtsganges dargestellt, wobei der sechste Vorwärtsgang ebenfalls als Windungsgang realisiert ist. Zum Einlegen des sechsten Vorwärtsganges ist die erste Reibkupplung geöffnet und die zweite Reibkupplung geschlossen, so dass die äußere Getriebeeingangswelle 4 angetrieben wird. Über die Zahnradstufe Z4 wird die Koppelvorrichtung 19 angetrieben, wodurch nun wiederum das Zahnrad 13 angetrieben wird. Hierdurch wird nun die Zahnradstufe Z3 rückwärts genutzt, das heißt der Leistungsfluss L6 wird von dem der Triebwelle 6 zugeordneten Zahnrad 13 auf das der Getriebeeingangswelle 3 zugeordnete Zahnrad 7 übertragen. Über die Getriebeeingangswelle 3 wird schließlich die hier in Fig. 3 neu hinzugefügte Zahnradstufe Z5 und damit die Triebwelle 5 und das Abtriebszahnrad 15 beziehungsweise der Triebkopf 17 vorwärts angetrieben. Die Zahnradstufe Z5 wird daher für einen weiteren Windungsgang genutzt, nämlich um die Gesamtübersetzung des sechsten Vorwärtsganges zu erzeugen. Die beiden Windungsgänge belegen jeweils drei Zahnradstufen, nämlich entweder die Zahnradstufen Z3, Z4 und Z2 für die Realisierung des ersten Ganges oder die Zahnradstufen Z4, Z3 und Z5 für die Realisierung des sechsten Ganges.

Der Windungsgang des ersten Vorwärtsganges nutzt eine einem benachbarten Vorwärtsgang zugeordnete Zahnradstufe, nämlich die dem zweiten Vorwärtsgang zugeordnete Zahnradstufe Z2. Der Windungsgang des sechsten Vorwärtsganges nutzt eine einem benachbarten Vorwärtsgang zugeordnete Zahnradstufe, nämlich die dem fünften Vorwärtsgang zugeordnete Zahnradstufe Z5.

Diese jeweilige Zahnradstufe Z2 bzw. Z5 des jeweils benachbarten Vorwärtsganges ist vorwärts nutzbar, wobei der Leistungsfluss L1 bzw. L6 von einem der Getriebeeingangswelle 3 bzw. 4 zugeordneten Zahnrad 10 bzw. 20 auf ein der Triebwelle 5 zugeordnetes Zahnrad 12 bzw. 21 übertragbar ist.

Der "erste" Windungsgang (erste Gang) nutzt die Zahnradstufe Z4 rückwärts, wobei der Leistungsfluss L1 des Windungsganges über diese entsprechende Zahnradstufe Z4 rückwärts, d.h. von dem der Triebwelle 6 zugeordneten Zahnrad 14 auf das der Getriebeeingangswelle 4 zugeordnete Zahnrad 9 übertragbar ist. Diese rückwärts durchlaufene Zahnradstufe Z4 ist einem Vorwärtsgang, nämlich dem vierten Vorwärtsgang zugeordnet, der nicht direkt benachbart zum Windungsgang ist. Der erste Vorwärtsgang als Windungsgang ist an der Gangabstufung gemessen nicht benachbart zum vierten Vorwärtsgang.

Der "sechste" Windungsgang (sechster Gang) nutzt die Zahnradstufe Z3 rückwärts, wobei der Leistungsfluss L6 des Windungsganges über diese entsprechende Zahnradstufe Z3 rückwärts, d.h. von dem der Triebwelle 6 zugeordneten Zahnrad 13 auf das der Getriebeeingangswelle 3 zugeordnete Zahnrad 7 übertragbar ist. Diese rückwärts durchlaufene Zahnradstufe Z3 ist einem Vorwärtsgang, nämlich dem dritten Vorwärtsgang zugeordnet, der nicht direkt benachbart zum Windungsgang ist. Der sechste Vorwärtsgang als Windungsgang ist an der Gangabstufung gemessen nicht benachbart zum dritten Vorwärtsgang.

Die Gesamtübersetzung der jeweiligen Windungsgänge kann so ausgerechnet werden, dass man einen Bruch bildet. Im Zähler dieses Bruches werden die Einzelübersetzungen der Zahnradstufen multipliziert, die vorwärts durchlaufen werden. Im Nenner werden die Einzelübersetzungen der Zahnradstufen miteinander multipliziert, die rückwärts durchlaufen werden. Für den "ersten" Windungsgang (erster Gang) ergibt sich eine Gesamtübersetzung $I_1 = (I_2 \times I_3)/I_4$. Für den Windungsgang des sechsten Vorwärtsganges ergibt sich eine Gesamtübersetzung $I_6 = (I_4 \times I_5)/I_3$. Hierbei bezeichnet $I_2$ die Einzelübersetzung der Zahnradstufe Z2, $I_3$ bezeichnet die Einzelübersetzung der Zahnradstufe Z3 usw.

Dadurch ist ein Doppelkupplungswindungsgetriebe 1 bereitgestellt, das für ein bis zwei Vorwärtsgänge entsprechende Windungsgänge benutzt bzw. realisiert. Ein bis zwei Vorwärtsgänge sind daher als Windungsgänge ausgebildet. Die Windungsgänge nutzen mindestens eine gerade Zahnradstufe und mindestens eine ungerade Zahnradstufe, das bedeutet, es wird eine der ersten Getriebeeingangswelle 3 zugeordnete Zahnradstufe Z3, Z5 und eine der zweiten Getriebeeingangswelle 4 zugeordnete Zahnradstufe Z2, Z4 genutzt, wobei diese beiden Zahnradstufen Z3, Z2 bzw. Z4, Z5 vorwärts durchlaufen werden, das heißt im Zähler des Bruches auftauchen. Außerdem erscheint höchstens die Einzelübersetzung einer zum Windungsgang benachbarten Zahnradstufe im Zähler -hier sind das die Einzelübersetzungen $I_2$ und $I_5$. Damit erscheint nur ein direkt dem Windungsgang benachbarter Vorwärtsgang im Zähler des Bruches. Im Beispiel sind dies die Einzelübersetzungen $I_2$ beziehungsweise $I_5$ der Zahnradstufe Z2 beziehungsweise der Zahnradstufe Z5.

Im Nenner der Gesamtübersetzung des jeweiligen Windungsganges erscheinen nur Einzelübersetzungen von Zahnradstufen, die Vorwärtsgängen zugeordnet sind, die nicht direkt benachbart zum jeweiligen Windungsgang sind. Im Beispiel der Fig. 2 und der Fig. 3 ist dies die Zahnradstufe Z4 mit der Einzelübersetzung $I_4$ beziehungsweise die Zahnradstufe Z3 mit der Einzelübersetzung $I_3$, die dem vierten Vorwärtsgang bzw. dem dritten Vorwärtsgang zugeordnet sind.

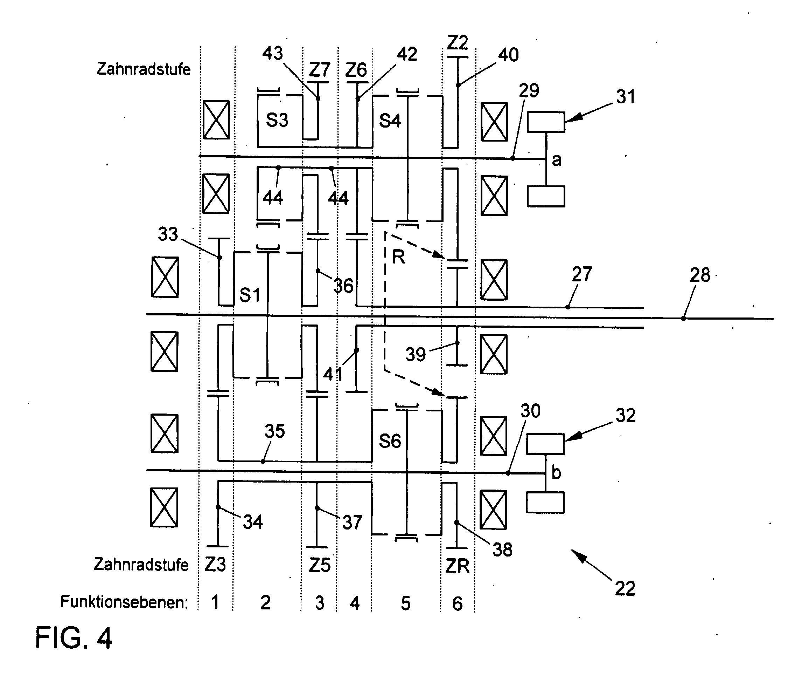

Im folgenden darf auf die Fig. 4 bis 8 Bezug genommen werden. In den Fig. 4 bis 8 sind fünf Doppelkupplungswindungsgetriebe 22, 23, 24, 25 und 26 dargestellt, allgemein hierzu darf folgendes ausgeführt werden:

Jedes dieser Doppelkupplungswindungsgetriebe 22 bis 26 weist zwei Getriebeeingangswellen 27, 28 auf, wobei die beiden Getriebeeingangswellen 27, 28 mit einer nicht dargestellten Doppelkupplung verbunden sind. Die beiden Getriebeeingangswellen 27, 28 sind koaxial zueinander angeordnet. Die Getriebeeingangswelle 27 ist hohl ausgebildet, wobei sich die Getriebeeingangswelle 28 durch die Getriebeeingangswelle 27 hindurch erstreckt.

Parallel beabstandet zu den beiden Getriebeeingangswellen 27, 28 sind zwei Triebwellen 29, 30 angeordnet. Auf jeder der Triebwellen 29, 30 ist ein Abtriebszahnrad 31, 32 angeordnet. Es sind ferner jeweils mehrere Zahnräder vorgesehen, wobei die Zahnräder derart angeordnet sind, dass diese kämmend angeordneten Zahnräder mehrere Zahnradstufen Z2, Z3, Z4, Z5, Z6, Z7, ZR bilden. Die Zahnradstufen Z2, Z3, Z4, Z5, Z6, Z7 sind dabei jeweils einem zweiten, dritten, vierten, fünften, sechsten und siebten Vorwärtsgang zugeordnet. Die Zahnradstufen Z2 bis Z7 weisen jeweils zwei Zahnräder auf, wobei das eine Zahnrad einer der beiden Getriebeeingangswellen 27, 28 zugeordnet ist und das andere Zahnrad kämmend hierzu angeordnet ist sowie einer der beiden Triebwellen 29 bzw. 30 zugeordnet ist. Der Zahnradstufe ZR für den Rückwärtsgang ist insbesondere durch ein erstes, auf einer der beiden Triebwellen angeordnetes Zahnrad, und durch ein zweites, auf der anderen Triebwelle angeordnetes Zahnrad gebildet, die dann miteinander in Eingriff stehen. Alternativ kann ein separates Rückwärtsgang-Zahnrad vorgesehen sein, dass auf einer separaten Nebenwelle angeordnet ist und mit einem einer Getriebeeingangswelle und mit einem einer Triebwelle zugeordnetem Zahnrad in Eingriff steht.

Die Doppelkupplungswindungsgetriebe 22 bis 26 weisen ferner mehrere Synchronisiervorrichtungen S1, S2, S3, S4, S5, S6, SX auf. Mit den Synchronisiervorrichtungen S2 bis SX sind die Zahnradstufen Z2 bis ZR derart schaltbar, dass mehrere Vorwärtsgänge schaltbar sind, wobei mindestens ein Gang als Windungsgang ausgebildet ist und sich dadurch der Leistungsfluss des Windungsganges über mindestens zwei, vzw. drei der Zahnradstufen Z2 bis ZR windet.

Insbesondere ist bei den dargestellten Doppelkupplungswindungsgetrieben 22 bis 26 der erste Vorwärtsgang als Windungsgang ausgebildet. Dass der erste Vorwärtsgang als Windungsgang ausgebildet ist, lässt sich in den Fig. 4 bis 8 daran erkennen, dass für den ersten Vorwärtsgang keine Zahnradstufe Z1 vorhanden ist. Die ungeraden Zahnradstufen Z3, Z5, Z7 sind der einen Getriebeeingangswelle 27 bzw. 28 zugeordnet und die geraden Zahnradstufen Z2, Z4, Z6 sind der anderen Getriebeeingangswelle 28 bzw. 27 zugeordnet. Hierdurch sind zwei Teilgetriebe gebildet. Das eine Teilgetriebe weist die ungeraden Zahnradstufen Z1, Z3 usw. auf. Das andere Teilgetriebe weist die geraden Zahnradstufen Z2, Z4 usw. auf. Die Zahnradstufe des Rückwärtsganges ist vorzugsweise dem Teilgetriebe mit den geraden Zahnradstufen Z2, Z4 usw. zugeordnet.

Den Doppelkupplungswindungsgetrieben 22 bis 26 ist ferner gemeinsam, dass die Synchronisiervorrichtungen S2 bis SX in insgesamt sechs Funktionsebenen (auch als "Bauelementebenen" bezeichenbar) angeordnet sind. Die Funktionsebenen eins bis drei sind im wesentlichen der inneren Getriebeeingangswelle 28 zugeordnet und damit einem ersten Teilgetriebe und die Funktionsebenen vier bis sechs sind der äußeren Getriebeeingangswelle 27 und damit einem zweiten Teilgetriebe zugeordnet. In dem einen Teilgetriebe sind die geraden Zahnradstufen Z2, Z4 und/oder Z6 und in dem anderen Teilgetriebe sind die ungeraden Gangstufen Z3, Z5 und/oder Z7 angeordnet.

Die eingangs genannten Nachteile sind nun dadurch vermieden, dass der Leistungsfluss der Windungsgänge sich sowohl über eine der ersten Getriebeeingangswelle 27 zugeordnete Zahnradstufe Z2, Z4, Z6 als auch über eine der zweiten Getriebeeingangswelle 28 zugeordnete Zahnradstufe Z3, Z5, Z7 windet.

Die Nutzung der Zahnradstufen Z2, Z4, Z6 bzw. Z3, Z5, Z7 für die Windungsgänge erfolgt vom Prinzip her ähnlich wie jeweils bei dem in den Fig. 2 und 3 dargestellten Doppelkupplungswindungsgetriebe 2.

Im folgenden darf nun zunächst auf das Doppelkupplungswindungsgetriebe 22 anhand von Fig. 4 näher eingegangen werden:

Das Doppelkupplungswindungsgetriebe 22 weist in der ersten Funktionsebene die Zahnradstufe Z3 auf. Die Zahnradstufe Z3 weist ein Losrad 33 auf, wobei das Losrad 33 auf der Getriebeeingangswelle 28 angeordnet ist. Das Losrad 33 ist über die Synchronisiervorrichtung S1 drehfest mit der zugeordneten Getriebeeingangswelle 28 verbindbar. Die Synchronisiervorrichtungen S1 und S3 sind in der zweiten Funktionsebene angeordnet. Die Zahnradstufe Z3 weist ferner ein Losrad 34 auf. Das Losrad 34 ist der Triebwelle 30 zugeordnet. Das Losrad 34 ist über die Synchronisiervorrichtung S6 drehfest mit der Triebwelle 30 verbindbar. Das Losrad 34 ist drehfest auf einer Hohlwelle 35 angeordnet, wobei die Hohlwelle 35 mit der Synchronisiervorrichtung S6 drehfest mit der Triebwelle 30 verbindbar ist. In einer dritten Funktionsebene ist die Zahnradstufe Z5 angeordnet, wobei die Zahnradstufe Z5 ebenfalls zwei Losräder 36, 37 aufweist. Das Losrad 36 ist lose auf der Getriebeeingangswelle 28 angeordnet und mit der doppelt wirkenden Synchronisiervorrichtung S1 drehfest mit der Getriebeeingangswelle 28 verbindbar. Das im kämmenden Eingriff mit dem Losrad 36 stehende Losrad 37 ist wiederum drehfest an der Hohlwelle 35 angeordnet. Mittels der Synchronisiervorrichtung S6 in der fünften Funktionsebene kann damit ebenfalls das Losrad 37 drehfest mit der Triebwelle 30 verbunden werden.

In der Funktionsebene drei ist die Zahnradstufe Z7 angeordnet. Die Zahnradstufe Z7 weist zum einen das Losrad 36 auf der inneren Getriebeeingangswelle 28 und zum anderen ein Losrad 43 auf, wobei das Losrad 43 der Triebwelle 29 zugeordnet ist. Über die Synchronisiervorrichtung S3 ist das Losrad 43 drehfest mit dem Losrad 42 der benachbarten Zahnradstufe Z6 verbindbar. Das Zahnrad 42 ist dabei drehfest mit einer Hohlwelle 44 verbunden. Auf der Hohlwelle 44 ist das Losrad 43 angeordnet. Die Synchronisiervorrichtung S3 dient nun zum drehfesten Verbinden der Hohlwelle 44 mit dem Losrad 43. Die Hohlwelle 44 bildet zusammen mit der Synchronisiervorrichtung S3 eine Koppelvorrichtung zur lösbaren Verbindung der benachbarten Zahnradstufen Z7 und Z6.

Der Triebwelle 30 und der Getriebeeingangswelle 27 ist ferner in der sechsten Funktionsebene die Zahnradstufe ZR zugeordnet, wobei ein Losrad 38 auf der Triebwelle 30 angeordnet ist. Das Losrad 38 ist mit der Synchronisiervorrichtung S6 drehfest mit der Triebwelle 30 verbindbar. Das Losrad 38 steht im kämmenden Eingriff mit einem Losrad 40, wobei das Losrad 40 über ein Festrad 39 antreibbar ist, wobei das Festrad 39 auf der äußeren Getriebeeingangswelle 27 und das Losrad 40 auf der Triebwelle 29 angeordnet ist. Das Festrad 39 ist ferner Teil der Zahnradstufe Z2, wobei die Zahnradstufe Z2 auch das der Triebwelle 29 zugeordnete Losrad 40 aufweist. Das Losrad 40 ist in der sechsten Funktionsebene angeordnet und über die Synchronisiervorrichtung S4 in der fünften Funktionsebene drehfest mit der Triebwelle 29 verbindbar. In der Funktionsebene vier ist ferner eine Zahnradstufe Z6 angeordnet, wobei die Zahnradstufe Z6 ein der äußeren Getriebeeingangswelle 27 zugeordnetes Festrad 41 und ein der Triebwelle 29 zugeordnetes Losrad 42 aufweist. Das Losrad 42 ist mittels der Synchronisiervorrichtung S4, die vorzugsweise als doppelt wirkende Synchronisiervorrichtung S4 ausgebildet ist, mit der Triebwelle 29 drehfest verbindbar.

Der inneren Getriebeeingangswelle 28 sind hier die ungeraden Zahnradstufen Z3 und Z5 zugeordnet.

Der Leistungsfluss des ersten Windungsganges wird durch Schließen der Synchronisiervorrichtung S1 von der Getriebeeingangswelle 28 über die Zahnradstufe Z3, von da aus weiter über die Zahnradstufen Z5, Z7, Z6 und Z2 (bei geschlossener Sychronisiervorrichtung S3) geleitet, wobei die Synchronisiervorrichtung S4 die Zahnradstufe Z2 drehfest mit der Triebwelle 29 verbindet. Die Vorwärtsgange zwei, drei, fünf, sechs und sieben sind nicht als Windungsgänge ausgebildet.

Der vierte Vorwärtsgang ist wiederum als Windungsgang ausgebildet. Dazu wird die äußere Getriebeeingangswelle 27 angetrieben. Die derart angetriebene Zahnradstufe Z6 überträgt den Leistungsfluss des vierten Vorwärtsganges weiter über die geschlossene Koppelvorrichtung beziehungsweise Synchronisiervorrichtung S3 auf die Zahnradstufe Z7 und damit auf die Zahnradstufe Z5. Hierdurch wird das Teilgetriebe gewechselt. Durch Schließen der Synchronisiervorrichtung S6 kann der Leistungsfluss des vierten Vorwärtsganges nun auf die Triebwelle 30 beziehungsweise das Abtriebszahnrad 32 geleitet werden.

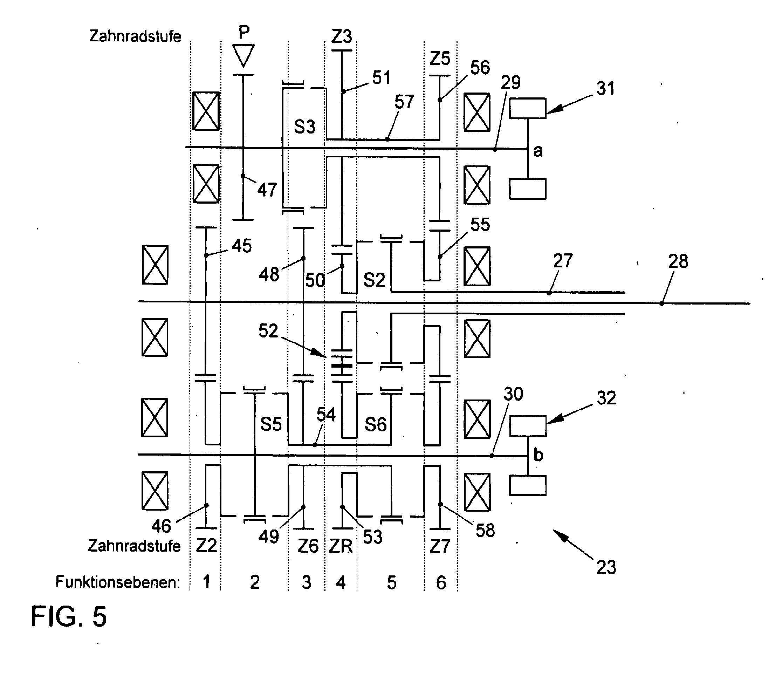

Im folgenden darf auf das Doppelkupplungswindungsgetriebe 23 anhand von Fig. 5 näher eingegangen werden:

In der Funktionsebene eins ist die Zahnradstufe Z2 mit einem Festrad 45 und mit einem Losrad 46 gebildet. Das Festrad 45 ist auf der inneren Getriebeeingangswelle 28 angeordnet. Das Losrad 46 ist auf der Triebwelle 30 angeordnet. In der zweiten Funktionsebene ist die Synchronisiervorrichtung S5 angeordnet, wobei mit der Synchronisiervorrichtung S5 das Losrad 46 drehfest mit der Triebwelle 30 verbindbar ist. In der Funktionsebene zwei ist auf der anderen Triebwelle 29 ein Parksperrenrad 47 mit einer zugeordneten Parksperre P angeordnet. In der dritten Funktionsebene ist ein Festrad 48 angeordnet. Das Festrad 48 ist Teil der ebenfalls in der dritten Funktionsebene angeordneten Zahnradstufe Z6. Die Zahnradstufe Z6 weist ein mit dem Festrad 48 in drehfesten Eingriff stehendes Losrad 49 auf. Das Losrad 49 ist mit der doppelt wirkenden Synchronisiervorrichtung S5 drehfest mit der Triebwelle 30 verbindbar. In der dritten Funktionsebene ist ferner die Synchronisiervorrichtung S3 auf der Triebwelle 29 angeordnet. In der vierten Funktionsebene sind die Zahnradstufen Z3 und ZR angeordnet. Die Zahnradstufe Z3 weist ein Losrad 51 und ein Losrad 50 auf. In der vierten Funktionsebene ist das Losrad 50 angeordnet, wobei das Losrad 50 mit der Synchronisiervorrichtung S2 drehfest mit der äußeren Getriebeeingangswelle 27 verbindbar ist. Das Losrad 50 ist als Teil der Zahnradstufe Z3 mit einem Losrad 51 kämmend verbunden. Das Losrad 51 ist mit einer Synchronisiervorrichtung S3 drehfest mit der Triebwelle 29 verbindbar.

Andererseits greift das Losrad 50 in ein Zwischenrad 52 als Teil einer Zahnradstufe ZR ein. Das Zwischenrad 52 steht wiederum im kämmenden Eingriff mit einem Losrad 53. Das Losrad 53 ist mit einer Synchronisiervorrichtung S6 drehfest mit dem benachbarten Losrad 49 der Zahnradstufe Z6 verbindbar. Dazu ist das Losrad 53 auf einer Hohlwelle 54 angeordnet. Die Hohlwelle 54 ist drehfest mit dem Losrad 49 verbunden und auf der Triebwelle 30 gelagert. Die Synchronisiervorrichtung S6 dient nun zum drehfesten Verbinden des Losrades 53 mit der Hohlwelle 54.

In der Funktionsebene fünf sind die beiden Synchronisiervorrichtungen S2 und S6 angeordnet. In der sechsten Funktionsebene sind die Zahnradstufen Z7 und Z5 angeordnet. Dazu ist auf der äußeren Getriebeeingangswelle 27 ein Losrad 55 angeordnet. Das Losrad 55 ist über die Synchronisiervorrichtung S2 drehfest mit der Getriebeeingangswelle 27 verbindbar. Das Losrad 55 ist zum einen Teil der Zahnradstufe Z5 und zum anderen Teil der Zahnradstufe Z7 zugeordnet. Die Zahnradstufe Z5 weist ferner das Losrad 56 auf, wobei das Losrad 56 über eine Hohlwelle 57 drehfest mit dem Losrad 51 gekoppelt ist. Dadurch kann die Synchronisiervorrichtung S3 genutzt werden und das Losrad 51 als auch gleichzeitig das Losrad 56 drehfest mit der Triebwelle 29 zu koppeln. Auf der anderen Triebwelle 30 ist ein Losrad 58 angeordnet. Das Losrad 58 ist mit der insbesondere doppelt wirkenden Synchronisiervorrichtung S6 drehfest mit der Hohlwelle 54 und damit der Zahnradstufe Z6 koppelbar.

Der erste Vorwärtsgang und der vierte Vorwärtsgang sind vorzugsweise als Windungsgänge ausgebildet. Der erste Vorwärtsgang kann beispielsweise dadurch realisiert sein, dass der Leistungsfluss von der äußeren Getriebeeingangswelle 27 durch Schließen der Synchronisiervorrichtung S2 auf die Zahnradstufe Z3 und von dort über die Hohlwelle 57 auf die Zahnradstufe Z5 und die Zahnradstufe Z7 auf die andere Triebwelle 30 übertragen werden kann. Durch Schließen der Synchronisiervorrichtung S6 kann der Leistungsfluss weiter von der Zahnradstufe Z7 auf die Zahnradstufe Z6 übertragen werden, wodurch die innere Getriebeeingangswelle 28 angetrieben wird. Über die mit der inneren Getriebeeingangswelle 28 ebenfalls in Verbindung stehende Zahnradstufe Z2 kann der Leistungsfluss durch Schließen der Synchronisiervorrichtung S5 auf die Triebwelle 30 übertragen werden, so dass schließlich das Abtriebszahnrad 32 angetrieben wird.

Der Windungsgang des vierten Vorwärtsganges kann dadurch realisiert sein, dass der Leistungsfluss von der inneren Getriebeeingangswelle 28 auf die Zahnradstufe Z6 und durch Schließen der Synchronisiervorrichtung S6 zurück auf die Zahnradstufe Z7 übertragbar ist, wodurch auch die Zahnradstufe Z5 auf der anderen Triebwelle 29 angetrieben wird. Durch Schließen der Synchronisiervorrichtung S3 wird der Leistungsfluss schließlich auf die Triebwelle 29 und damit auf das Abtriebszahnrad 31 geleitet.

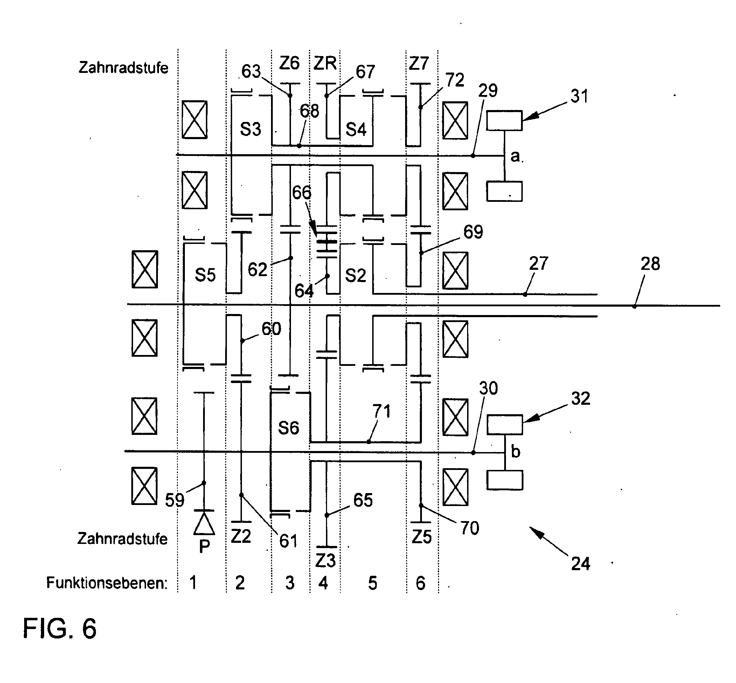

Im folgenden darf auf Fig. 6 und das dort dargestellte Doppelkupplungswindungsgetriebe 24 näher eingegangen werden:

Das Doppelkupplungswindungsgetriebe 24 weist in der ersten Fünktionsebene ein Parksperrenrad 59 auf. Das Parksperrenrad 59 ist drehfest mit der Triebwelle 30 verbunden. In der ersten Funktionsebene ist ferner eine Synchronisiervorrichtung S5 angeordnet, die der inneren Getriebeeingangswelle 28 zugeordnet ist.

In der zweiten Funktionsebene ist die Zahnradstufe Z2 mit einem Losrad 60 auf der inneren Getriebeeingangswelle 28 und mit einem Festrad 61 auf der Triebwelle 30 angeordnet. Der anderen Triebwelle 29 ist in der Funktionsebene zwei eine Synchronisiervorrichtung S3 zugeordnet. Das Festrad 61 und das Losrad 60 bilden die Zahnradstufe Z2, wobei das Losrad 60 mittels der Synchronisiervorrichtung S5 drehfest mit der inneren Getriebeeingangswelle 28 verbindbar ist.

In der dritten Funktionsebene ist auf der Triebwelle 30 eine Synchronisiervorrichtung S6 angeordnet. Der inneren Getriebeeingangswelle 28 ist in der dritten Funktionsebene ein Festrad 62 zugeordnet. Das Festrad 62 ist Teil der Zahnradstufe Z6. Das Festrad 62 steht im Eingriff mit einem Losrad 63 als weiterer Teil der Zahnradstufe Z6. Das Losrad 63 ist mittels der Synchronisiervorrichtung S3 drehfest mit der Triebwelle 29 verbindbar.

In der vierten Funktionsebene sind die Zahnradstufen Z3 und ZR angeordnet. Der äußeren Getriebeeingangswelle 27 ist dabei ein Losrad 64 als Teil dieser beiden Zahnradstufen ZR und Z3 zugeordnet. Das Losrad 64 ist mittels der Synchronisiervorrichtung S2 drehfest mit der Getriebeeingangswelle 27 verbindbar. Die Zahnradstufe Z3 weist ferner ein Losrad 65 auf, wobei das Losrad 65 mittels der Synchronisiervorrichtung S6 drehfest mit der Triebwelle 30 verbindbar ist. Die Zahnradstufe ZR weist ein Zwischenrad 66 und ein Losrad 67 auf. Das Losrad 67 ist mittels der Synchronisiervorrichtung S4 drehfest mit der Zahnradstufe Z6 verbindbar, nämlich mit dem Losrad 63 verbindbar. Dazu ist das Losrad 63 drehfest auf einer Hohlwelle 68 angeordnet, wobei das Losrad 67 ebenfalls auf der Hohlwelle 68, aber nur lose angeordnet ist. Die Synchronisiervorrichtung S4 dient dazu, eine drehfeste Verbindung zwischen der Hohlwelle 68 und dem Losrad 67 der Zahnradstufe ZR zu schaffen.

Die Synchronisiervorrichtungen S2 und S4 sind in der fünften Funktionsebene angeordnet. In der sechsten Funktionsebene sind die Zahnradstufen Z5 und Z7 angeordnet. Dazu ist auf der äußeren Getriebeeingangswelle 27 ein Losrad 69 angeordnet. Das Losrad 69 ist mit der insbesondere doppelt wirkenden Synchronisiervorrichtung S2 drehfest lösbar mit der äußeren Getriebeeingangswelle 27 verbindbar. Die Zahnradstufe Z5 weist ferner ein Losrad 70 auf, wobei das Losrad 70 über eine Hohlwelle 71 drehfest mit dem Losrad 65 der benachbarten Zahnradstufe Z3 gekoppelt ist. Das Losrad 70 ist daher mittels der Synchronisiervorrichtung S6 drehfest mit der Triebwelle 30 verbindbar. Die Zahnradstufe Z7 weist neben dem Losrad 69 ferner ein Losrad 72 auf. Das Losrad 72 ist mittels der insbesondere doppelt wirkenden Synchronisiervorrichtung S4 drehfest mit der Triebwelle 29 verbindbar. Die Vorwärtsgänge eins und vier sind als Windungsgänge ausgebildet; die restlichen Vorwärtsgänge zwei, drei, fünf, sechs und sieben sind durch die zugeordneten Zahnradstufen Z2, Z3, Z5, Z6 und Z7 gebildet. Der erste Vorwärtsgang ist als Windungsgang ausgebildet, wobei sich der Leistungsfluss von der Getriebeeingangswelle 27 über die geschlossene Synchronisiervorrichtung S2 auf die Zahnradstufe Z3 erstreckt und über die Zahnradstufen Z5 und Z7 geleitet wird, wobei durch Schließen der Synchronisiervorrichtung S4 die Hohlwelle 68 angetrieben wird und so über die Zahnradstufe Z6 bei geschlossener Sychronisiervorrichtung S5 über die Zahnradstufe Z2 die Triebwelle 30 antreibbar ist. Der vierte Vorwärtsgang ist ebenfalls als Windungsgang realisiert, wobei der Leistungsfluss von der Getriebeeingangswelle 28 auf die Zahnradstufe Z6 übertragen wird. Der Leistungsfluss wird durch Schließen der Synchronisiervorrichtung S4 auf die Zahnradstufe Z7 geleitet, wodurch ebenfalls die Zahnradstufe Z5 angetrieben wird. Durch Schließen der Synchronisiervorrichtung S6 wird eine drehfeste Verbindung mit der Triebwelle 30 hergestellt, so dass das Abtriebszahnrad 32 angetrieben wird.

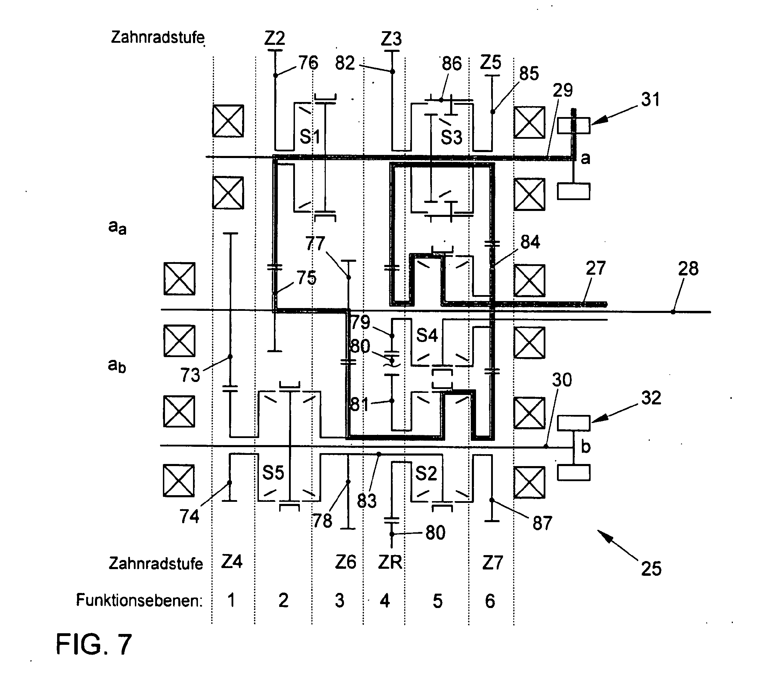

Im folgenden darf auf das Doppelkupplungswindungsgetriebe 25 anhand von Fig. 7 näher eingegangen werden:

In der ersten Funktionsebene ist die Zahnradstufe Z4 mit einem Festrad 73 auf der inneren Getriebeeingangswelle 28 und einem Losrad 74 auf der Triebwelle 30 angeordnet. In der zweiten Funktionsebene ist die Zahnradstufe Z2 mit einem Festrad 75 auf der inneren Getriebeeingangswelle 28 und einem Losrad 76 auf der Triebwelle 29 angeordnet. In der zweiten Funktionsebene ist ferner die Synchronisiervorrichtung S5 angeordnet, wobei mit der Synchronisiervorrichtung S5 das Losrad 74 der Zahnradstufe Z4 drehfest mit der Triebwelle 30 verbindbar ist.

In der Funktionsebene drei ist die Synchronisiervorrichtung S1 zum drehfesten Verbinden des Losrads 76 der Zahnradstufe Z2 mit der Triebwelle 29 angeordnet. Ferner ist in der Funktionsebene drei ein Festrad 77 auf der inneren Getriebeeingangswelle 28 angeordnet. Mit dem Festrad 77 der Zahnradstufe Z6 steht in Eingriff ein Losrad 78. Das Losrad 78 ist mittels der Synchronisiervorrichtung S5 drehfest mit der Triebwelle 30 verbindbar. In der Funktionsebene vier sind die Zahnradstufen Z3 und ZR angeordnet, wobei die Zahnradstufe Z3 und ZR ein gemeinsames Losrad 79 aufweisen. Das Losrad 79 ist über die Synchronisiervorrichtung S4 drehfest mit der Getriebeeingangswelle 27 verbindbar.

Über ein Zwischenrad 80 treibt das Losrad 79 ein Losrad 81 an und bildet dadurch die Zahnradstufe ZR. Der Zahnradstufe Z3 sind andererseits auf der Triebwelle 29 ein Losrad 82 zugeordnet.

In der Funktionsebene fünf sind die Synchronisiervorrichtungen S3 auf der Triebwelle 29 die Synchronisiervorrichtung S4 auf der Getriebeeingangswelle 27 beziehungsweise 28 und die Synchronisiervorrichtung S2 auf der Triebwelle 30 angeordnet. Die Synchronisiervorrichtung S3 dient dazu, die Zahnradstufe Z3 drehfest mit der Triebwelle 29 zu verbinden. Über die Synchronisiervorrichtung S4 kann das Losrad 79 drehfest mit der Getriebeeingangswelle 27 verbunden werden. Mittels der Synchronisiervorrichtung S2 kann das Losrad 81 drehfest mit der Zahnradstufe Z6, insbesondere dem Losrad 78 verbunden werden. Dazu ist das Losrad 78 drehfest mit einer Hohlwelle 83 verbunden, wobei das Losrad 81 lose auf der Hohlwelle 83 angeordnet ist. Mittels der Synchronisiervorrichtung S2 kann eine drehfeste Verbindung zwischen dem Losrad 81 und der Hohlwelle 83 und somit dem Losrad 78 geschaffen werden.

In der sechsten Funktionsebene sind die Zahnradstufen Z5 und Z7 angeordnet, wobei die Zahnradstufen Z5 und Z7 sich ein auf der äußeren Getriebeeingangswelle 27 angeordnetes Losrad 84 teilen. Dieses Losrad 84 ist mittels der Synchronisiervorrichtung S4 drehfest mit der äußeren Getriebeeingangswelle 27 verbindbar. Die Zahnradstufe Z5 weist auf der Triebwelle 29 ein Losrad 85 auf. Das Losrad 85 ist über eine Kopplung 86 drehfest mit dem Losrad 82 der Zahnradstufe Z3 verbunden. Diese beiden Zahnräder 85 und 82 können nun über die Synchronisiervorrichtung S3 drehfest mit der Triebwelle 29 verbunden werden. Die Zahnradstufe Z7 weist ein Losrad 87 auf, wobei das Losrad 87 über die Synchronisiervorrichtung S2 drehfest mit der Zahnradstufe Z6, insbesondere dem Losrad 78 verbindbar ist. Dem zweiten, dritten, vierten, fünften, sechsten und siebten Vorwärtsgang und dem Rückwärtsgang sind die Zahnradstufen Z2 bis Z7 beziehungsweise ZR zugeordnet.

Der erste Gang ist nun als Windungsgang ausgebildet, wobei hierzu die äußere Getriebeeingangswelle 27 angetrieben wird und über die geschlossene Synchronisiervorrichtung S4 die Zahnradstufe Z3 angetrieben ist. Durch die Kopplung 86 ist wiederum die Zahnradstufe Z5 angetrieben, ohne eine drehfeste Verbindung mit der Triebwelle 29 herzustellen. Die Zahnradstufe Z5 treibt die Zahnradstufe Z7 auf der anderen Triebwelle 30 an, wobei über die geschlossene Synchronisiervorrichtung S2 die Zahnradstufe Z6 angetrieben wird. Die Zahnradstufe Z6 treibt nun das Festrad 77 auf der inneren Getriebeeingangswelle 28 und damit auch das Festrad 75 auf dieser Getriebeeingangswelle 28 an, wodurch die Zahnradstufe Z2 auf der Triebwelle 29 angetrieben wird. Über die geschlossene Synchronisiervorrichtung S1 wird der Leistungsfluss schließlich auf das Abtriebszahnrad 31 übertragen.

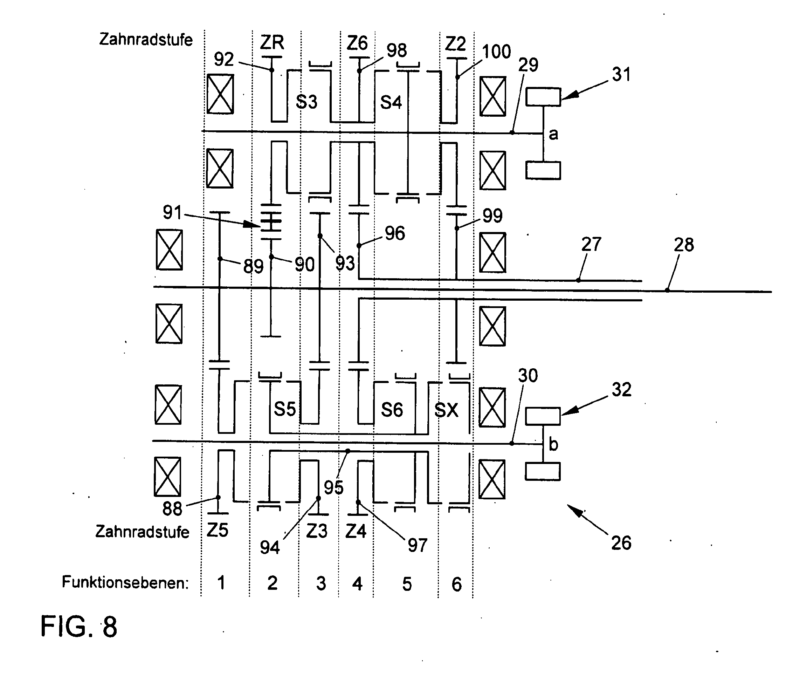

Im folgenden darf auf das Doppelkupplungswindungsgetriebe 26 anhand von Fig. 8 näher eingegangen werden:

In der Funktionsebene eins ist die Zahnradstufe Z5 angeordnet. Die Zahnradstufe Z5 weist ein Losrad 88 auf der Triebwelle 30 und ein Festrad 89 auf der inneren Getriebeeingangswelle 28 auf. In der Funktionsebene zwei ist eine Synchronisiervorrichtung S5 zum drehfesten Verbinden des Losrades 88 und einer Hohlwelle 95 vorgesehen. In der Funktionsebene zwei ist ferner die Zahnradstufe ZR für den Rückwärtsgang angeordnet. Die Zahnradstufe ZR weist ein Festrad 90 auf der Getriebeeingangswelle 28, ein Zwischenrad 91 und ein Losrad 92 auf der Triebwelle 29 auf.

In der dritten Funktionsebene ist die Synchronisiervorrichtung S3 angeordnet, mit der das Losrad 92 drehfest mit der Zahnradstufe Z6 verbindbar ist. In der dritten Funktionsebene ist ferner die Zahnradstufe Z3 mit einem Festrad 93 auf der Getriebeeingangswelle 28 und einem Losrad 94 angeordnet. Das Losrad 94 ist mittels der doppelt wirkenden Synchronisiervorrichtung S5 drehfest mit der Hohlwelle 95 verbindbar.

In der vierten Funktionsebene ist die Zahnradstufe Z4 angeordnet. Die Zahnradstufe Z4 weist ein Festrad 96 auf der äußeren Getriebeeingangswelle 27 auf. Die Zahnradstufe Z4 weist ferner ein mit dem Festrad 96 im Eingriff stehendes Losrad 97 auf. Das Losrad 97 ist mit einer Synchronisiervorrichtung S6 drehfest mit der Hohlwelle 95 verbindbar. Die Synchronisiervorrichtung S6 ist in der fünften Funktionsebene angeordnet. In der vierten Funktionsebene ist ferner die Zahnradstufe Z6 angeordnet, wobei die Zahnradstufe Z6 ebenfalls das Festrad 96 benutzt. Der Zahnradstufe Z6 ist ein Losrad 98 zugeordnet, wobei das Losrad 98 mittels der Synchronisiervorrichtung S4 in der fünften Funktionsebene drehfest mit der Triebwelle 29 verbindbar ist.

In der sechsten Funktionsebene ist ein Festrad 99 auf der äußeren Getriebeeingangswelle 27 angeordnet, wobei das Festrad 99 ein Losrad 100 als Teil der Zahnradstufe Z2 antreibt. Mittels der doppelt wirkenden Synchronisiervorrichtung S4 ist das Losrad 100 drehfest mit der Triebwelle 29 verbindbar. Auf der anderen Triebwelle 30 ist eine Synchronisiervorrichtung SX angeordnet, wobei die Hohlwelle 95 drehfest mit der Synchronisiervorrichtung SX mit der Triebwelle 30 verbindbar ist.

Der erste Vorwärtsgang und der siebte Vorwärtsgang sind nun hierbei als Windungsgang ausgebildet. Um den ersten Vorwärtsgang zu schalten, wird der Leistungsfluss über die innere Getriebeeingangswelle 28 auf die Zahnradstufe Z3 übertragen. Durch Schließen der Synchronisiervorrichtung S5 wird die Hohlwelle 95 und durch Schließen der Synchronisiervorrichtung S6 wird die Zahnradstufe Z4 angetrieben. Dadurch, dass die Zahnradstufe Z4 angetrieben wird, wird die äußere Getriebeeingangswelle mit den beiden Festrädern 96 und 99 angetrieben. Die hierdurch angetriebene Zahnradstufe Z2 überträgt den Leistungsfluss über die geschlossene Synchronisiervorrichtung S4 auf die Triebwelle 29 und damit auf das Abtriebszahnrad 31.

Zur Übertragung des Leistungsfluss des siebten Vorwärtsganges wird ebenfalls die innere Getriebeeingangswelle 28 angetrieben, wobei über die Zahnradstufe Z5 und die geschlossene Synchronisiervorrichtung S5 die Hohlwelle 95 angetrieben wird. Die Synchronisiervorrichtung S6 ist des weiteren geschlossen, so dass über die Zahnradstufe Z4 der Leistungsfluss weiter über die äußere Getriebeeingangswelle 27 auf die Zahnradstufe Z6 übertragen wird. Durch Schließen der Synchronisiervorrichtung S4 wird der Leistungsfluss wiederum auf die andere Triebwelle 29 und damit auf das Abtriebszahnrad 31 übertragen.

Die Doppelkupplungswindungsgetriebe 22 bis 26 weisen vorzugsweise eine progressive Gangstufung auf. Diese progressive Gangstufung kann näherungsweise durch die Zahnradstufen Z2 bis Z7 gegeben sein. Es gibt nun unterschiedliche Kombinationen, wie Windungsgänge bereitgestellt werden können:

$$I_1 = (I_2 \times I_3 \times I_7) / (I_5 \times I_6) \qquad \text{(vgl. Fig. 4, 5, 7),}$$

$$I_1 = (I_2 \times I_3) / I_4 \qquad \text{(vgl. Fig. 2)},$$

Weitere mögliche Windungsübersetzungen ergeben sich aus folgenden Übersetzungkombinationen:

$$I_4 = (I_5 \times I_6) / I_7 \qquad \text{(vgl. Fig. 4, 5, 6)}$$

$$I_6 = (I_4 \times I_5) / I_3 \qquad \text{(vgl. Fig. 3)}$$

$$I_7 = (I_5 \times I_6) / I_4 \qquad \text{(vgl. Fig. 8)}$$

Diese Kombinationen von Übersetzungen sind derart gewählt (vgl. Fig. 4 bis 8), dass der Windungsgang eine einem benachbarten Vorwärtsgang zugeordnete Zahnradstufe Z2, Z3, Z4, Z5, Z6 bzw. Z7, nutzt. Die Zahnradstufe Z2, Z3, Z4, Z5, Z6, Z7 des benachbarten Vorwärtsganges ist vorwärts nutzbar, wobei der Leistungsfluss von einem der Getriebeeingangswelle 27, 28 zugeordneten Zahnrad auf ein der Triebwelle 29, 30 zugeordnetes Zahnrad übertragbar ist. Dadurch ist der benachbarte Vorwärtsgang lastschaltbar.

Es ist vorteilhaft, wenn das Doppelkupplungswindungsgetriebe 22 bis 26 eine progressive Gangstufung aufweist. Vorzugsweise ist mindestens ein mechanischer Rückwärtsgang mit einer zugeordneten Zahnradstufe ZR vorhanden. Es können vier Aktuatoren bzw. Synchronisiervorrichtungen S1, S2, S3, S4, S5, S6 und/oder SX zur Gangwahl vorgesehen sein. Ziel ist es, möglichst nur wenige der Vorwärtsgänge mit mehr als zwei Zahnradstufen Z2 bis Z7 beziehungsweise zwei Zahneingriffen im Kraftfluss zwischen dem Motor und dem Rad zu haben. Der Windungsgang nutzt eine der Zahnradstufen Z2, Z3, Z4, Z5, Z6, Z7 rückwärts, wobei der Leistungsfluss des Windungsganges über die entsprechende Zahnradstufe Z2, Z3, Z4, Z5, Z6, Z7 rückwärts, d.h. von einem der Triebwelle 29, 30 zugeordneten Zahnrad auf ein der Getriebeeingangswelle 27, 28 (bzw. 3, 4) zugeordnetes Zahnrad übertragbar ist. Diese mindestens eine rückwärts durchlaufene Zahnradstufe Z2, Z3, Z4, Z5, Z6, Z7 ist einem Vorwärtsgang zugeordnet, der nicht direkt benachbart zum Windungsgang ist. Die im Windungsgang genutzte, vorwärts durchlaufene Zahnradstufe Z2, Z3, Z4, Z5, Z6, Z7 der einen Getriebeeingangswelle 3, 4; 27, 28 und die im Windungsgang rückwärts genutzte Zahnradstufe Z2, Z3, Z4, Z5, Z6, Z7 der anderen Getriebeeingangswelle 4,3 bzw. 28,27 sind über eine Synchronisiervorrichtung S1, S2, S3, S4, S5, S6, SX und/oder eine Hohlwelle 19a, 44, 54, 68, 83, 95 miteinander drehfest verbunden oder verbindbar.

**Bezugszeichenliste**

| | |
|---|---|
| 1 | Doppelkupplungswindungsgetriebe |
| 2 | Doppelkupplungsgetriebe |
| 3 | Getriebeeingangswelle |
| 4 | Getriebeeingangswelle |
| 5 | Triebwelle |
| 6 | Triebwelle |
| 7 | Zahnrad |
| 8 | Zahnrad |
| 9 | Zahnrad |
| 10 | Zahnrad |
| 11 | Zahnrad |
| 12 | Zahnrad |
| 13 | Zahnrad |
| 14 | Zahnrad |
| 15 | Abtriebszahnrad |
| 16 | Abtriebszahnrad |
| 17 | Triebkopf |
| 18 | Triebkopf |
| 19 | Koppelvorrichtung |
| 19a | Hohlwelle |

| 20 | Zahnrad |
|----|---------|
| 21 | Zahnrad |
| 22 | Doppelkupplungswindungsgetriebe |
| 23 | Doppelkupplungswindungsgetriebe |
| 24 | Doppelkupplungswindungsgetriebe |
| 25 | Doppelkupplungswindungsgetriebe |
| 26 | Doppelkupplungswindungsgetriebe |
| 27 | Getriebeeingangswelle |
| 28 | Getriebeeingangswelle |
| 29 | Triebwelle |
| 30 | Triebwelle |
| 31 | Abtriebszahnrad |
| 32 | Abtriebszahnrad |
| 33 | Losrad |
| 34 | Losrad |
| 35 | Hohlwelle |
| 36 | Losrad |
| 37 | Losrad |
| 38 | Losrad |
| 39 | Festrad |
| 40 | Losrad |
| 41 | Festrad |
| 42 | Losrad |
| 43 | Losrad |
| 44 | Hohlwelle |
| 45 | Festrad |
| 46 | Losrad |
| 47 | Parksperrenrad |
| 48 | Festrad |
| 49 | Losrad |
| 50 | Losrad |
| 51 | Losrad |
| 52 | Zwischenrad |
| 53 | Losrad |
| 54 | Hohlwelle |
| 55 | Losrad |
| 56 | Losrad |
| 57 | Hohlwelle |
| 58 | Losrad |
| 59 | Parksperrenrad |
| 60 | Losrad |
| 61 | Festrad |
| 62 | Festrad |
| 63 | Losrad |
| 64 | Losrad |
| 65 | Losrad |
| 66 | Zwischenrad |
| 67 | Losrad |
| 68 | Hohlwelle |
| 69 | Losrad |
| 70 | Losrad |
| 71 | Hohlwelle |
| 72 | Losrad |
| 73 | Festrad |
| 74 | Losrad |
| 75 | Festrad |
| 76 | Losrad |
| 77 | Festrad |

78 Losrad
79 Losrad
80 Zwischenrad
81 Losrad
82 Losrad
83 Hohlwelle
84 Losrad
85 Losrad
86 Kopplung
87 Losrad
88 Losrad
89 Festrad
90 Festrad
91 Zwischenrad
92 Losrad
93 Festrad
94 Losrad
95 Hohlwelle
96 Festrad
97 Losrad
98 Losrad
99 Festrad
100 Losrad

L1 Leistungsfluss
L6 Leistungsfluss

Z1 Zahnradstufe
Z2 Zahnradstufe
Z3 Zahnradstufe
Z4 Zahnradstufe
Z5 Zahnradstufe
Z6 Zahnradstufe
Z7 Zahnradstufe
ZR Zahnradstufe

S1 Synchronisiervorrichtung
S2 Synchronisiervorrichtung
S3 Synchronisiervorrichtung
S4 Synchronisiervorrichtung
S5 Synchronisiervorrichtung
S6 Synchronisiervorrichtung
SX Synchronisiervorrichtung

P Parksperre

**Patentansprüche**

1. Doppelkupplungswindungsgetriebe (22, 23, 24, 25) für ein Kraftfahrzeug mit einer ersten Getriebeeingangswelle (27), mit einer zweiten Getriebeeingangswelle (28), mit mindestens zwei Triebwellen (29, 30), mit mehreren Zahnrädern und mit mehreren Synchronisiervorrichtungen (S1, S2, S3, S4, S5, S6), wobei die erste Getriebeeingangswelle (27) über eine erste Reibkupplung und die zweite Getriebeeingangswelle (28) über eine zweite Reibkupplung mit einem Antriebsmotor verbindbar oder verbunden ist, wobei die Zahnräder derart kämmend angeordnet sind, dass diese mehrere Zahnradstufen (Z2, Z3, Z4, Z5, Z6, Z7, ZR) bilden, wobei mit den Synchronisiervorrichtungen (S2, S3, S4, S5, S6) die Zahnradstufen (Z2, Z3, Z4, Z5, Z6, Z7, ZR) derart schaltbar sind, dass mehrere Vorwärtsgänge schaltbar sind, wobei mindestens ein Vorwärtsgang als Windungsgang ausgebildet ist und sich dadurch der Leistungsfluss (L1, L6) des Windungsganges über mindestens zwei Zahnradstufen (Z2, Z3, Z4, Z5, Z6, Z7, ZR) windet, wobei die den Vorwärtsgängen zugeordneten Zahnradstufen (Z2 bis Z7) jeweils ein der Triebwelle (29, 30) zugeordnetes und ein der Getriebeeingangswelle (27, 28) zugeordnetes Zahnrad aufweisen, wobei wenigstens eines der Getriebeeingangswellen (27, 28) zugeordneten Zahnräder zwei Zahnradstufen (Z5, Z7) gleichzeitig zugeordnet ist **dadurch gekennzeichnet, dass** das den zwei Zahnradstufen (Z5, Z7) gleichzeitig zugeordnete, erste Zahnrad (36, 55, 69, 84) einer der Getriebeeingangswelle als Losrad ausgeführt ist, und dass der Leistungsfluss (L1) wenigstens eines Windungsganges sich sowohl über mindestens eine der ersten Getriebeeingangswelle (27) zugeordnete Zahnradstufe (Z2, Z3,Z4, Z5, Z6, Z7) als auch über mindestens eine der zweiten Getriebeeingangswelle (28) zugeordnete Zahnradstufe (Z2, Z3, Z4, Z5, Z6, Z7) windet, wobei der Leistungsfluss (L1) des Windungsganges beide dem ersten Zahnrad (36, 55, 69, 84) zugeordnete Zahnradstufen (Z5, Z7) durchläuft, und dass einer der Triebwellen (29, 30) ein zweites Zahnrad (43, 58, 72, 87) und ein drittes Zahnrad (42, 49, 63, 78) zugeordnet sind, die als Losräder ausgeführt sind und drehfest miteinander verbindbar sind, wobei das zweite Zahnrad (43, 58, 72, 87) einer dem erstem Zahnrad (36, 55, 69, 84) zugeordneten Zahnradstufen (Z5, Z7) zugeordnet ist und das dritte Zahnrad einer anderen Zahnradstufe (Z6) zugeordnet ist, und wobei die andere Zahnradstufe (Z6) der anderen Getriebeeingangswelle (27, 28) als das erste Zahnrad (36, 55, 69, 84) zugeordnet ist.

2. Doppelkupplungswindungsgetriebe nach Anspruch 1, **dadurch gekennzeichnet, dass** der Windungsgang eine einem benachbarten Vorwärtsgang zugeordnete Zahnradstufe (Z2, Z3, Z4, Z5, Z6, Z7) nutzt.

3. Doppelkupplungswindungsgetriebe nach dem vorstehenden Anspruch, **dadurch gekennzeichnet, dass** die Zahnradstufe (Z2, Z3, Z4, Z5, Z6, Z7) des benachbarten Vorwärtsganges vorwärts nutzbar ist, wobei der Leistungsfluss (L1, L6) von einem der Getriebeeingangswelle (27, 28) zugeordneten Zahnrad auf ein der Triebwelle (29, 30) zugeordnetes Zahnrad übertragbar ist.

4. Doppelkupplungswindungsgetriebe nach einem der vorstehenden Ansprüche, **dadurch gekennzeichnet, dass** der Windungsgang eine Zahnradstufe (Z2, Z3, Z4, Z5, Z6, Z7) rückwärts nutzt, wobei der Leistungsfluss (L1, L6) des Windungsganges über die entsprechende Zahnradstufe (Z2, Z3, Z4, Z5, Z6, Z7) rückwärts, d.h. von einem der Triebwelle (29, 30) zugeordneten Zahnrad auf ein der Getriebeeingangswelle (27,28 ) zugeordnetes Zahnrad übertragbar ist.

5. Doppelkupplungswindungsgetriebe nach einem der vorstehenden Ansprüche, **dadurch gekennzeichnet, dass** der Windungsgang mindestens eine rückwärts durchlaufene Zahnradstufe (Z2, Z3, Z4, Z5, Z6, Z7) nutzt, wobei diese rückwärts durchlaufene Zahnradstufe (Z2, Z3, Z4, Z5, Z6, Z7) einem Vorwärtsgang zugeordnet ist, der nicht direkt benachbart zum Windungsgang ist.

6. Doppelkupplungswindungsgetriebe nach einem der vorstehenden Ansprüche, **dadurch gekennzeichnet, dass** der erste Vorwärtsgang als Windungsgang ausgebildet ist.

7. Doppelkupplungswindungsgetriebe nach dem vorstehenden Anspruch, **dadurch gekennzeichnet, dass** der Windungsgang des ersten Vorwärtsganges die dem zweiten Vorwärtsgang zugeordnete Zahnradstufe (Z2) nutzt, wobei diese Zahnradstufe vorwärts durchlaufen ist.

8. Doppelkupplungswindungsgetriebe nach einem der vorstehenden Ansprüche, **dadurch gekennzeichnet, dass** der vierte Vorwärtsgang als Windungsgang ausgebildet ist.

9. Doppelkupplungswindungsgetriebe nach einem der vorstehenden Ansprüche, **dadurch gekennzeichnet, dass** sieben Vorwärtsgänge und ein mechanischer Rückwärtsgang vorgesehen sind.

10. Doppelkupplungswindungsgetriebe nach einem der vorstehenden Ansprüche, **dadurch gekennzeichnet, dass** fünf Zahnradstufen (Z2, Z3, Z4, Z5, Z6 bzw. Z7) den Vorwärtsgängen zugeordnet sind und eine Zahnradstufe (ZR) dem Rückwärtsgang zugeordnet ist.

11. Doppelkupplungswindungsgetriebe nach einem der vorstehenden Ansprüche, **dadurch gekennzeichnet, dass** eine doppelt-geometrische Gangstufung näherungsweise realisiert ist.

12. Doppelkupplungswindungsgetriebe nach einem der vorstehenden Ansprüche, **dadurch gekennzeichnet, dass** eine progressive Gangstufung näherungsweise realisiert ist.

13. Doppelkupplungswindungsgetriebe nach einem der vorstehenden Ansprüche, **dadurch gekennzeichnet, dass** nicht mehr als vier Synchronisiervorrichtungen (S1, S2, S3, S4, S5, S6) vorgesehen sind, wobei die Synchronisiervorrichtungen (S1, S2, S3, S4, S5, S6 ) zumindest teilweise als doppelt wirkende Synchronisiervorrichtungen (S1, S2, S3, S4, S5, S6) ausgebildet sind.

14. Doppelkupplungswindungsgetriebe nach einem der vorstehenden Ansprüche, **dadurch gekennzeichnet, dass** der Windungsgang nicht mehr als zwei Zahnradstufen (Z2, Z3, Z4, Z5, Z6, Z7) pro Getriebeeingangswelle (27, 28) nutzt.

15. Doppelkupplungswindungsgetriebe nach einem der vorstehenden Ansprüche, **dadurch gekennzeichnet, dass** die im Windungsgang genutzte, vorwärts durchlaufene Zahnradstufe (Z2, Z3, Z4, Z5, Z6, Z7) der einen Getriebeeingangswelle (27, 28) und die im Windungsgang rückwärts genutzte Zahnradstufe (Z2, Z3, Z4, Z5, Z6, Z7) der anderen Getriebeeingangswelle (28,27) über eine Synchronisiervorrichtung (S1, S2, S3, S4, S5, S6) und/oder eine Hohlwelle (44, 54, 68, 83) miteinander drehfest verbunden oder verbindbar sind.

**Claims**

1. Double clutch winding transmission (22, 23, 24, 25) for a motor vehicle having a first transmission input shaft (27), having a second transmission input shaft (28), having at least two drive shafts (29, 30), having a plurality of gearwheels and having a plurality of synchronizing apparatuses (S1, S2, S3, S4, S5, S6), the first transmission input shaft (27) being connectable or connected via a first friction clutch and the second transmission input shaft (28) being connectable or connected via a second friction clutch to a drive engine, the gearwheels being arranged in a meshing manner such that they form a plurality of gearwheel stages (Z2, Z3, Z4, Z5, Z6, Z7, ZR) , it being possible for the gearwheel stages (Z2, Z3, Z4, Z5, Z6, Z7, ZR) to be selected by way of the synchronizing apparatuses (S2, S3, S4, S5, S6) in such a way that a plurality of forward gears can be selected, at least one forward gear being configured as a winding gear and, as a result, the power flow (L1, L6) of the winding gear winding over at least two gearwheel stages (Z2, Z3, Z4, Z5, Z6, Z7, ZR), the gearwheel stages (Z2 to Z7) which are assigned to the forward gears having in each case one gearwheel which is assigned to the drive shaft (29, 30) and one gearwheel which is assigned to the transmission input shaft (27, 28), at least one of the gearwheels which is assigned to the transmission input shafts (27, 28) being assigned to two gearwheel stages (Z5, Z7) at the same time, **characterized in that** the first gearwheel (36, 55, 69, 84), which is assigned to the two gearwheel stages (Z5, Z7) at the same time, of one of the transmission input shafts is configured as a idler gear, and **in that** the power flow (L1) of at least one winding gear winds both over at least one gearwheel stage (Z2, Z3, Z4, Z5, Z6, Z7) which is assigned to the first transmission input shaft (27) and over at least one gearwheel stage (Z2, Z3, Z4, Z5, Z6, Z7) which is assigned to the second transmission input shaft (28), the power flow (L1) of the winding gear running through both gearwheel stages (Z5, Z7) which are assigned to the first gearwheel (36, 55, 69, 84), and **in that** one of the drive shafts (29, 30) is assigned a second gearwheel (43, 58, 72, 87) and a third gearwheel (42, 49, 63, 78) which are configured as idler gears and can be connected fixedly to one another so as to rotate together, the second gearwheel (43, 58, 72, 87) being assigned to one of the gearwheel stages (Z5, Z7) which are assigned to the first gearwheel (36, 55, 69, 84) and the third gearwheel being assigned to another gearwheel stage (Z6), and the other gearwheel stage (Z6) being assigned to the other transmission input shaft (27, 28) as the first gearwheel (36, 55, 69, 84).

2. Double clutch winding transmission according to Claim 1, **characterized in that** the winding gear utilizes a gearwheel stage (Z2, Z3, Z4, Z5, Z6, Z7) which is assigned to an adjacent forward gear.

3. Double clutch winding transmission according to the preceding claim, **characterized in that** the gearwheel stage (Z2, Z3, Z4, Z5, Z6, Z7) of the adjacent forward gear can be utilized in a forward direction, it being possible for the power flow (L1, L6) to be transmitted from a gearwheel which is assigned to the transmission input shaft (27, 28) to a gearwheel which is assigned to the drive shaft (29, 30).

4. Double clutch winding transmission according to one of the preceding claims, **characterized in that** the winding gear utilizes a gearwheel stage (Z2, Z3, Z4, Z5, Z6, Z7) in the reverse direction, it being possible for the power flow (L1, L6) of the winding gear to be transmitted via the corresponding gearwheel stage (Z2, Z3, Z4, Z5, Z6, Z7) in the reverse direction, that is to say from a gearwheel which is assigned to the drive shaft (29, 30) to a gearwheel which is assigned to the transmission input shaft (27, 28).

5. Double clutch winding transmission according to one of the preceding claims, **characterized in that** the winding gear utilizes at least one gearwheel stage (Z2, Z3, Z4, Z5, Z6, Z7) which is run through in the reverse direction, the said gearwheel stage (Z2, Z3, Z4, Z5, Z6, Z7) which is run through in the reverse direction being assigned to a forward gear which is not directly adjacent to the winding gear.

6. Double clutch winding transmission according to one of the preceding claims, **characterized in that** the first forward gear is configured as a winding gear.

7. Double clutch winding transmission according to the preceding claim, **characterized in that** the winding gear of the first forward gear utilizes the gearwheel stage (Z2) which is assigned to the second forward gear, the said gearwheel stage being run through in the forward direction.

8. Double clutch winding transmission according to one of the preceding claims, **characterized in that** the fourth forward gear is configured as a winding gear.

9. Double clutch winding transmission according to one of the preceding claims, **characterized in that** seven forward gears and a mechanical reverse gear are provided.

10. Double clutch winding transmission according to one of the preceding claims, **characterized in that** five gearwheel stages (Z2, Z3, Z4, Z5, Z6 and Z7) are assigned to the forward gears and one gearwheel stage (ZR) is assigned to the reverse gear.

11. Double clutch winding transmission according to one of the preceding claims, **characterized in that** a double geometric gear ratio is approximately realized.

12. Double clutch winding transmission according to one of the preceding claims, **characterized in that** a progressive gear ratio is approximately realized.

13. Double clutch winding transmission according to one of the preceding claims, **characterized in that** not more than four synchronizing apparatuses (S1, S2, S3, S4, S5, S6) are provided, the synchronizing apparatuses (S1, S2, S3, S4, S5, S6) being configured at least partially as double acting synchronizing apparatuses (S1, S2, S3, S4, S5, S6).

14. Double clutch winding transmission according to one of the preceding claims, **characterized in that** the winding gear utilizes not more than two gearwheel stages (Z2, Z3, Z4, Z5, Z6, Z7) per transmission input shaft (27, 28).

15. Double clutch winding transmission according to one of the preceding claims, **characterized in that** the gearwheel stage (Z2, Z3, Z4, Z5, Z6, Z7) of the one transmission input shaft (27, 28), which gearwheel stage (Z2, Z3, Z4, Z5, Z6, Z7) is utilized in the winding gear and is run through in the forward direction, and the gearwheel stage (Z2, Z3, Z4, Z5, Z6, Z7) of the other transmission input shaft (28, 27), which gearwheel stage (Z2, Z3, Z4, Z5, Z6, Z7) is utilized in the reverse direction in the winding gear, are connected or can be connected fixedly to one another so as to rotate together via a synchronizing apparatus (S1, S2, S3, S4, S5, S6) and/or a hollow shaft (44, 54, 68, 83).

**Revendications**

1. Boîte de vitesses à contournement à double embrayage (22, 23, 24, 25) pour un véhicule automobile avec un premier arbre d'entrée de boîte de vitesses (27), avec un deuxième arbre d'entrée de boîte de vitesses (28), avec au moins deux arbres de transmission (29, 30), avec plusieurs roues dentées et avec plusieurs dispositifs de synchronisation (S1, S2, S3, S4, S5, S6), dans laquelle le premier arbre d'entrée de boîte de vitesses (27) est ou peut être relié à un moteur d'entraînement par un premier accouplement à friction et le deuxième arbre d'entrée de boîte de vitesses (28) est ou peut être relié à un moteur d'entraînement par un deuxième accouplement à friction, dans laquelle les roues dentées sont disposées en prise de telle manière que celles-ci forment plusieurs étages de roues dentées (Z2, Z3, Z4, Z5, Z6, Z7, ZR), dans laquelle les étages de roues dentées (Z2, Z3, Z4, Z5, Z6, Z7, ZR) peuvent être engagés avec les dispositifs de synchronisation (S2, S3, S4, S5, S6) de telle manière que plusieurs marches avant puissent être engagées, dans laquelle au moins une marche avant est réalisée comme une marche couplée et le flux de puissance (L1, L6) de la marche couplée se développe ainsi sur au moins deux étages de roues dentées (Z2, Z3, Z4, Z5, Z6, Z7, ZR), dans laquelle les étages de roues dentées (Z2 à Z7) associés aux marches avant présentent respectivement une roue dentée associée à l'arbre de transmission (29, 30) et une roue dentée associée à l'arbre d'entrée de boîte de vitesses (27, 28), dans laquelle au moins une des roues dentées associées aux arbres d'entrée de boîte de vitesses (27, 28) est simultanément associée à deux étages de roues dentées (Z5, Z7), **caractérisée en ce que** la première roue dentée (36, 55, 69, 84) d'un des arbres d'entrée de boîte de vitesses simultanément associée aux deux étages de roues dentées (Z5, Z7) est réalisée comme roue folle, et **en ce que** le flux de puissance (L1) d'au moins une marche couplée se développe aussi bien par au moins un étage de roues dentées (Z2, Z3, Z4, Z5, Z6, Z7) associé au premier arbre d'entrée de boîte de vitesses (27) que par au moins un étage de roues dentées ((Z2, Z3, Z4, Z5, Z6, Z7) associé au deuxième arbre d'entrée de boîte de vitesses (28), dans laquelle le flux de puissance (L1) de la marche couplée parcourt les deux étages de roues dentées (Z5, Z7) associés à la première roue dentée (36, 55, 69, 84), et **en ce qu'**une deuxième roue dentée (43, 58, 72, 87) et une troisième roue dentée (42, 49, 63, 78), qui sont réalisées comme des roues folles et qui peuvent être calées l'une par rapport à l'autre, sont associées à un des arbres de transmission (29, 30), dans laquelle la deuxième roue dentée (43, 58, 72, 87) est associée à un étage de roues dentées (Z5, Z7) associé à la première roue dentée (36, 55, 69, 84) et la troisième roue dentée est associée à un autre étage de roues dentées (Z6), et dans laquelle l'autre étage de roues dentées (Z6) est associé à l'autre arbre d'entrée de boîte de vitesses (27, 28) que la première roue dentée (36, 55, 69, 84).

**2.** Boîte de vitesses à contournement à double embrayage selon la revendication 1, **caractérisée en ce que** la marche couplée utilise un étage de roues dentées (Z2, Z3, Z4, Z5, Z6, Z7) associé à une marche avant voisine.

**3.** Boîte de vitesses à contournement à double embrayage selon la revendication précédente, **caractérisée en ce que** l'étage de roues dentés (Z2, Z3, Z4, Z5, Z6, Z7) de la marche avant voisine est utilisable vers l'avant, dans laquelle le flux de puissance (L1, L6) peut être transmis d'une roue dentée associée à l'arbre d'entrée de boîte de vitesses (27, 28) à une roue dentée associée à l'arbre de transmission (29, 30).

**4.** Boîte de vitesses à contournement à double embrayage selon l'une quelconque des revendications précédentes, **caractérisée en ce que** la marche couplée utilise un étage de roues dentées (Z2, Z3, Z4, Z5, Z6, Z7) vers l'arrière, dans laquelle le flux de puissance (L1, L6) de la marche couplée peut être transmis vers l'arrière par l'étage de roues dentées correspondant (Z2, Z3, Z4, Z5, Z6, Z7), c'est-à-dire d'une roue dentée associée à l'arbre de transmission (29, 30) à une roue dentée associée à l'arbre d'entrée de boîte de vitesses (27, 28).

**5.** Boîte de vitesses à contournement à double embrayage selon l'une quelconque des revendications précédentes, **caractérisée en ce que** la marche couplée utilise au moins un étage de roues dentées (Z2, Z3, Z4, Z5, Z6, Z7) parcouru en arrière, dans laquelle cet étage de roues dentées parcouru en arrière (Z2, Z3, Z4, Z5, Z6, Z7) est associé à une marche avant, qui n'est pas directement voisine de la marche couplée.

**6.** Boîte de vitesses à contournement à double embrayage selon l'une quelconque des revendications précédentes, **caractérisée en ce que** la première marche avant est réalisée comme marche couplée.

**7.** Boîte de vitesses à contournement à double embrayage selon la revendication précédente, **caractérisée en ce que** la marche couplée de la première marche avant utilise l'étage de roues dentées (Z2) associé à la deuxième marche avant, dans laquelle cet étage de roues dentées est parcouru vers l'avant.

**8.** Boîte de vitesses à contournement à double embrayage selon l'une quelconque des revendications précédentes, **caractérisée en ce que** la quatrième marche avant est réalisée comme marche couplée.

**9.** Boîte de vitesses à contournement à double embrayage selon l'une quelconque des revendications précédentes, **caractérisée en ce qu'**il est prévu sept marches avant et une marche arrière mécanique.

**10.** Boîte de vitesses à contournement à double embrayage selon l'une quelconque des revendications précédentes, **caractérisée en ce que** cinq étages de roues dentées (Z2, Z3, Z4, Z5, Z6 ou Z7) sont associés aux marches avant et un étage de roues dentées (ZR) est associé à la marche arrière.

**11.** Boîte de vitesses à contournement à double embrayage selon l'une quelconque des revendications précédentes, **caractérisée en ce qu'**un étagement des vitesses doublement géométrique est approximativement réalisé.

**12.** Boîte de vitesses à contournement à double embrayage selon l'une quelconque des revendications précédentes, **caractérisée en ce qu'**un étagement des vitesses progressif est approximativement réalisé.

**13.** Boîte de vitesses à contournement à double embrayage selon l'une quelconque des revendications précédentes, **caractérisée en ce qu'**il n'est pas prévu plus de quatre dispositifs de synchronisation (S1, S2, S3, S4, S5, S6), dans laquelle les dispositifs de synchronisation (S1, S2, S3, S4, S5, S6) sont réalisés au moins partiellement comme des dispositifs de synchronisation à double action (S1, S2, S3, S4, S5, S6).

14. Boîte de vitesses à contournement à double embrayage selon l'une quelconque des revendications précédentes, **caractérisée en ce que** la marche couplée n'utilise pas plus de deux étages de roues dentées (Z2, Z3, Z4, Z5, Z6, Z7) par arbre d'entrée de boîte de vitesses (27, 28).

15. Boîte de vitesses à contournement à double embrayage selon l'une quelconque des revendications précédentes, **caractérisée en ce que** l'étage de roues dentées (Z2, Z3, Z4, Z5, Z6, Z7) utilisé dans la marche couplée et parcouru en avant d'un premier arbre d'entrée de boîte de vitesses (27, 28) et l'étage de roues dentées (Z2, Z3, Z4, Z5, Z6, Z7) utilisé en arrière dans la marche couplée de l'autre arbre d'entrée de boîte de vitesses (28, 27) sont ou peuvent être reliés l'un à l'autre de façon calée en rotation par un dispositif de synchronisation (S1, S2, S3, S4, S5, S6) et/ou un arbre creux (44, 54, 68, 83).

FIG. 1

$$I_1 = (I_2 \times I_3)/ I_4$$

FIG. 2

$$I_6 = (I_4 \times I_5)/ I_3$$

FIG. 3

FIG. 4

Zahnradstufe

Zahnradstufe

Funktionsebenen:

FIG. 5

FIG. 6

Zahnradstufe

63 Z6 ZR 67 Z7 72 29 31

S3 68 S4 a

66

S5 62 S2 69 64 27 28

60

S6 71 30 32

b

59 65 70

Zahnradstufe P Z2 61 Z5

Z3 24

Funktionsebenen: 1 2 3 4 5 6

EP 2 655 924 B1

FIG. 7

EP 2 655 924 B1

FIG. 8

Zahnradstufe    ZR    Z6    98    Z2    100    29

Funktionsebenen:    1    2    3    4    5    6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006054281
- DE 102007051806 A1
- DE 102007049266 A1
- DE 19860251 C1